(19)

Europäisches Patentamt
European Patent Office
Office européen des brevets

(11) **EP 3 279 153 B1**

(12) **EUROPEAN PATENT SPECIFICATION**

(45) Date of publication and mention
of the grant of the patent:
**17.04.2019 Bulletin 2019/16**

(51) Int Cl.:
***C02F 1/469*** *(2006.01)*      ***B01D 61/48*** *(2006.01)*
***C02F 1/42*** *(2006.01)*

(21) Application number: **17184365.9**

(22) Date of filing: **01.08.2017**

(54) **APPARATUS FOR PURIFYING A LIQUID AND METHOD FOR OPERATING SAID APPARATUS**

VORRICHTUNG ZUR REINIGUNG EINER FLÜSSIGKEIT UND VERFAHREN ZUM BETRIEB DER BESAGTEN VORRICHTUNG

APPAREIL DE PURIFICATION D'UN LIQUIDE ET PROCÉDÉ DE FONCTIONNEMENT DUDIT APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2016  IT 201600080955**

(43) Date of publication of application:
**07.02.2018  Bulletin 2018/06**

(73) Proprietor: **IDROPAN DELL'ORTO DEPURATORI S.r.l.**
**20159 Milano (IT)**

(72) Inventors:
• **SERVIDA, Tullio**
  **I-20124 Milano (IT)**
• **SERVIDA, Ettore Carlo Italo**
  **I-20124 Milano (IT)**

(74) Representative: **Gallo, Luca**
**Gallo & Partners S.r.l.**
**Via Rezzonico, 6**
**35131 Padova (IT)**

(56) References cited:
**EP-A1- 2 778 140      WO-A1-2015/068797**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Field of application

The present invention regards an apparatus for purifying a liquid and a method for operating said apparatus, according to the preamble of the respective independent claims.

The present apparatus is inserted in the industrial field of production of apparatuses for purifying liquids, and is intended to be advantageously employed for removing from liquids undesired concentrations of contaminants, e.g. constituted by salts dissolved at their interior.

More in detail, the present apparatus can also be intended for multiple applications in industrial as well as civil fields, for example the desalination of seawater, the softening of particularly hard waters, the removal, from water, of salts (such as chlorides and sulfates), nitrates, nitrites, ammonia, heavy metals, organic substances or micro-pollutants in general, or for the deionization of liquids for example of industrial processes or for the concentration of pollutant substances that are difficult to dispose of or advantageous to recover for a reuse.

State of the art

There is increasing need, both for civil and industrial uses, to be able to arrange apparatuses capable of producing desalinated water starting from water with a high degree of salinity or in any case a degree of salinity greater than the optimal level, even if for example this is water provided by the normal water supply system.

For example, the hardness and more in general the salts contained in the water cause a series of problems for the operation of apparatuses for home use and, in some cases, they can reach concentrations that are too high for the water itself to be considered drinkable.

In order to remedy such drawbacks, various types of apparatuses for desalination have been provided, for example reverse osmosis apparatuses, ion-exchange softeners, capacitive deionization apparatuses and electrodialysis/reverse electrodialysis apparatuses. Each of these apparatuses, however, has both positive and negative characteristics; one technology that is clearly better than the others has not emerged.

More in detail, the electrodialysis apparatuses (or electrodialyzers) in a known manner comprise a container divided into a plurality of cells by means of a plurality of alternating ion-conductive membranes, i.e. cationic and anionic, which respectively allow the passage of only positive ions (cations) and of only negative ions (anions), so as to form a stack of cells in succession. The end cells of the stack carry, associated thereto, electrodes chargeable to opposite polarities.

The cells are continuously supplied with a flow of water with high salinity (or more generally by a fluid to be purified), such that after the application of a potential difference to the electrodes, a direct current is created following the passage of positive ions that traverse the cationic membrane and of negative ions that traverse the anionic membrane.

During the process, the following are formed in an alternating manner: cells in which there is the concentration of ions, and cells in which there is the purification of the water by the ions. Following the electrostatic force that attracts the ions towards the respective opposite electrodes and following the selective action of the membranes. In practice, in the purification cells, the anions are attracted towards the positive electrode and traverse the anionic membranes while the cations are attracted towards the negative electrode and traverse the cationic membranes. However, in the concentration cells, side-by-side those of purification, the ions can only enter since the anions are stopped in their travel towards the positive electrode by the cationic membrane while the cations are stopped in their travel towards the negative electrode by the anionic membrane.

Such approximate structural scheme is at the basis for making the electrodialysis apparatuses which are most widespread on the market today, in which the ion-poor purification cells are traversed by a first flow of purified water, while the ion-rich concentration cells are traversed by a second cleaning water flow for the removal of the ions which - through the semipermeable membranes - leave the purification cells.

Such electrodialysis apparatuses have demonstrated that they do not lack drawbacks.

A first drawback lies in their high complexity, given that the membranes that compose the stack must all be sealed with respect to the container in order to prevent pouring off purified water together with the cleaning water.

The stacks of the electrodialysis apparatuses in fact involve a complex structure constituted by the abovementioned series of ion-exchange membranes supported by plastic frames which create the various concentration and dilution compartments.

Consequently, a great number of sealing gaskets compressed by terminal plates are necessary, which often generate losses and require adjustments and regulations which are possible and relatively easy to achieve in an industrial plant but are quite prohibitive for small installations, such as those in the home. A second drawback lies in the high water waste, given that a continuous supply is usually provided for both cell types.

A third further drawback lies in the poor efficiency of such apparatuses, since efficient systems have not been implemented for cleaning the membranes, which are consequently subjected to a progressive diminution of their filtering capacity due to the accumulation of particles and deposits on the membranes. In particular, in the supply water, colloidal particles are present in suspension, which are not allowed to cross the membranes and hence they are deposited thereon, deteriorating the efficiency thereof even in a short time period. The same particles which are deposited on the semipermeable membranes also encrust the surface of the electrodes, limiting the correct operation thereof, and hence cooperating to further diminish the efficiency of the electrodialysis apparatus. In addition, there is often the phenomenon of precipitation on the membranes of the concentration cells, which involves a further worsening of the performances of the electrodialysis apparatus.

Therefore, in summary, the electrodialysis and reverse electrodialysis apparatuses - while frequently used on an industrial level for the desalination of water and while very efficient in many respects - due to their structural complexity, are generally not valid for smaller-size apparatuses such as those required in the home environment.

In order to overcome these drawbacks, in particular in the 1960s and 1970s by Lacey, Thompson and Bass (see "Cyclic electrodialysis: Experimental results in a closed system" by D. W. Thompson, and D. Bass published in June 1974 in the "The Canadian Journal of Chemical Engineering" Volume 52, edition 3 pages 289-432), electrodialysis apparatuses were developed in which a first cell type is still crossed by a liquid flow to be purified while the adjacent cells are of a second closed type, i.e. delimited by two semipermeable membranes at different polarities, joined together perimetrically and spaced by a third layer interposed between those of the two different semipermeable membranes.

Such apparatus, described for example in the patent US 3219567, provides for the cyclic reversal of the polarity such that the second closed cells in a first phase accumulate at their interior the ions coming from the first cells, and in a second phase they expel such ions towards the first cells.

The reversal of the polarity reduces the problems of precipitation of the salts present in the closed cells when they act as concentration cells, typical of the conventional electrodialysis apparatuses, however they do not allow meeting the needs of the market in a satisfactory manner.

In particular, the latter electrodialysis apparatuses have the drawback of not being able to determine, with sufficient precision, when it is necessary to proceed with a phase of polarity reversal for the regeneration of the closed cells, a maximum concentration of ions inside the cell having been reached.

A further drawback lies in the fact that the impossibility of evaluating the level of depletion of the closed cells, i.e. of their residual capacity to absorb additional ions, does not allow defining a flexible programming and hence a flexible use of the apparatus. As is known, especially for a use in the home, water needs vary during the course of the day and it would be desirable to arrange an apparatus for purifying water which is susceptible of meeting the home water needs, by being flexibly adapted to the use requirements.

A further drawback of the aforesaid electrodialysis apparatus with closed cells lies in the fact that it is unable to satisfactorily address, i.e. by maintaining a high purification efficiency and avoiding failure, the pressure variations that usually occur with a supply of water drawn from the water supply system that normally supplies homes, for home use. Indeed, both due to the aforesaid pressure variations of the water supply system and following the absorption of ions and water molecules associated with the transport of the same ions, the closed cells can considerably vary their volume and hence their capacity to maintain the concentrated ions, which were absorbed through the membranes.

These volume variations negatively affect the compression of the stack, increasing it or decreasing it. This fact leads to a mechanical stress on the membranes themselves that in some cases can break the membranes, or it can lead to poor compression, hence to an increase of the actual passage openings in the desalination cells.

Capacitive deionization apparatuses (abbreviated as "CDI" apparatuses) are also known, for purifying liquids with cells connected in series or in parallel, each provided with one or more flow-through capacitors. Each capacitor comprises a plurality of superimposed electrodes, facing each other, defining a plurality of single cells. Between such cells, a flow of a liquid to be purified containing ionized particles is made to pass, for the purpose of obtaining a solvent with such particles (whether these are ions, or other charged substances depending on the specific application) removed therefrom. More in detail, the electrodes of the flow-through capacitors are formed with one or more superimposed layers of conductive material with porous structure, such as activated carbon preferably associated with a semipermeable membrane (respectively of cationic or anionic type with reference to the two opposite electrodes of the single cell).

The apparatus also comprises a direct current power supply connected to the electrodes of the flow-through capacitors and adapted to charge each electrode to a polarity opposite that of the electrode facing thereto in the same capacitor, in order to generate an electrostatic field between such facing electrodes aimed to attract the ionized particles present in the liquid to be purified onto the electrodes.

More in detail, in operation, a direct polarity charging phase is provided for, in which the facing electrodes of the flow-through capacitor are charged to different charge polarity and brought to a provided operating voltage, for example equal to about 1.5 V, and an operating phase in which the liquid flow to be treated is forced to pass through the electrodes of the capacitor thus charged. During such operating phase, the ionized particles are removed from the liquid, since such particles are attracted by the respective electrodes with polarity opposite thereto, determining a progressive accumulation of the ionized particles on the same electrodes.

Once a programmed saturation of the electrodes with the ionized particles present in the liquid has been reached, a regeneration phase is provided for, in which the electrodes are deactivated and a washing liquid flow is forced to pass into the flow-through capacitor with consequent removal of the ionized particles accumulated on the electrodes.

More in detail, the regeneration phase with electrodes deactivated can provide for a phase of discharging the electrodes with short-circuiting, a phase of charging to reversed polarity, in which the electrodes are subjected to a voltage with reversed polarity aimed to move the charged particles away from the electrodes on which they have been accumulated, and generally a possible phase of discharging is provided for, before once again starting the subsequent charging and operating phases.

One example of capacitive deionization apparatus (with flow-through capacitors) of the abovementioned type is described in the patent application WO 2015/068797.

Such apparatuses with flow-through capacitors have drawbacks analogous to those of the electrodialysis apparatuses regarding the problems connected to the precipitation of the salts - regarding the poor versatility in meeting the variable needs of a private user, who in the course of the day may require water consumption peaks (e.g. typically in the first few hours of the morning), and periods of little use (e.g. typically during the night).

In addition, as with the conventional electrodialysis apparatuses, also the CDI apparatuses have complex structure and require considerable expedients in order to ensure the seal of the single cells.

The European Patent application EP 2 778 140 A1 tries to address the problems with known CDI and electrodialysis apparatuses by providing a chamber for evacuating the cationic particles and/or anionic particles absorbed by the operating chambers.

Presentation of the invention

In this situation, the problem underlying the present invention is therefore that of eliminating the problems of the abovementioned prior art, by providing an apparatus for purifying a liquid, which is entirely reliable in operation, and in particular capable of limiting the risk that charged particles extracted from a flow of supply fluid precipitate in the concentration chambers.

A further object of the present invention is to provide an apparatus for purifying a liquid which is provided with a high filtering output of charged particles present in the liquid.

A further object of the present invention is to provide an apparatus for purifying a liquid that does not require period adjustments, i.e. it requires low maintenance.

A further object of the present invention is to provide an apparatus for purifying a liquid that prevents dirtying the ion-exchange membranes, which negatively affects the effectiveness of the apparatuses present on the market today.

A further object of the present invention is to provide an apparatus for purifying a liquid that is structurally simple and inexpensive to make.

A further object of the present invention is to provide an apparatus for purifying a liquid which allows limiting the energy consumption and the water consumption for the regeneration.

A further object of the present invention is to provide an apparatus for purifying a liquid which allows meeting normal home requirements with a limited size.

A further object of the present invention is to provide a method for operating said apparatus which allows knowing the residual effectiveness of the apparatus before a provided regeneration phase.

A further object of the present invention is to provide a method for operating said apparatus which allows being adapted in a versatile manner to the needs of a user in a home environment.

A further object of the present invention is to provide a method for operating said apparatus capable of adapting the provided current flow to the actual conductivity of the treated water, in order to maintain the value of salinity of the producer water as constant as possible.

Brief description of the drawings

The technical characteristics of the invention, according to the aforesaid objects, are clearly seen in the contents of the below-reported claims and the advantages thereof are more evident in the following detailed description, made with reference to the enclosed drawings, which represent several merely exemplifying and non-limiting embodiments of the invention, in which:

- figure 1 shows an overall view of the apparatus for purifying a liquid according to the present invention;
- figure 2 shows an exploded view of a first embodiment of the apparatus for purifying a liquid, object of the present invention;
- figure 3 shows an exploded view of a second embodiment of the apparatus for purifying a liquid, object of the present invention;
- figure 4 shows a detail of the apparatus for purifying a liquid, object of the present invention, relative to the stacking of membranes and first and second spacing means aimed to form a stack of the same apparatus;
- figure 5 shows a detail of the apparatus for purifying a liquid, object of the present invention, relative to second elastically yielding means interposed in the stack of the same apparatus;
- figure 6 shows, in a perspective view, a detail of the apparatus for purifying a liquid, object of the present invention, relative to a closed cell with the layers indicated in exploded view;
- figure 7 shows the closed cell of figure 6 in a plan view with the three layers joined together;

- figure 8 shows a section view of the closed cell of figure 7 with respect to a diameter plane;
- figure 9 shows a detail of the apparatus for purifying a liquid, object of the present invention, relative to end covers, to electrodes and an internal pipe of the same apparatus;
- figure 10 shows a first hydraulic diagram of the apparatus for purifying a liquid according to a first embodiment of the present invention;
- figure 11 shows a second hydraulic diagram of the apparatus for purifying a liquid according to a second embodiment of the present invention;
- figure 12 shows a third hydraulic diagram of the apparatus for purifying a liquid according to a third embodiment of the present invention;
- figure 13 shows a fourth hydraulic diagram of the apparatus for purifying a liquid according to a fourth embodiment of the present invention;
- figure 14 shows a first operating diagram of the apparatus for purifying a liquid in a provided operating phase;
- figure 15 shows a second operating diagram of the apparatus for purifying a liquid in a provided regeneration phase.

Detailed description of a preferred embodiment

With reference to the set of drawings, reference number 1 overall indicates an embodiment of an apparatus for purifying a liquid, object of the present invention.

The apparatus 1, according to the invention, is adapted to be employed for removing ionized particles from liquids. Such ionized particles, e.g. ions in solution, are present at the interior of such apparatus and are susceptible of being affected by the presence of an electric field.

Hereinbelow, the term ionized particles will generically indicate any contaminant dissolved in the liquid to be treated that is capable of being attracted by an electrostatic field, such as in particular the ions dissolved in a liquid such as water.

The apparatus is therefore adapted for operating for the deionization of industrial process liquids and for the deionization of water, in particular for softening the water of the supply system and for the desalination of seawater, in particular being capable of removing the following from its interior: salts in solution (such as chlorides and sulfides), nitrates, nitrites, ammonia, and other polarized contaminants of organic substances or micro-pollutants in general.

The apparatus is also adapted to concentrate ionized particles inside liquids, particularly of industrial processes, in order to facilitate the recovery or the disposal of such particles.

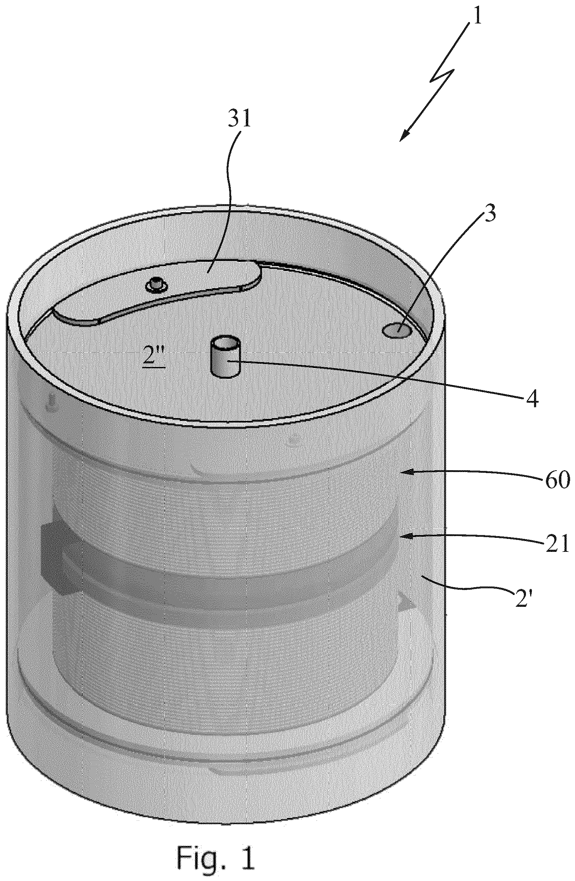

In accordance with the embodiment illustrated in figure 1, the present apparatus 1 comprises a container 2, preferably of cylindrical form, comprising a side wall 2' closed at the ends by two covers 2". The container 2 is provided with at least one inlet opening 3 and with at least one outlet opening 4 through which it is susceptible of being traversed by a liquid flow to be treated F, such as water, containing ionized particles such as calcium, sodium, chloride and bicarbonate ions.

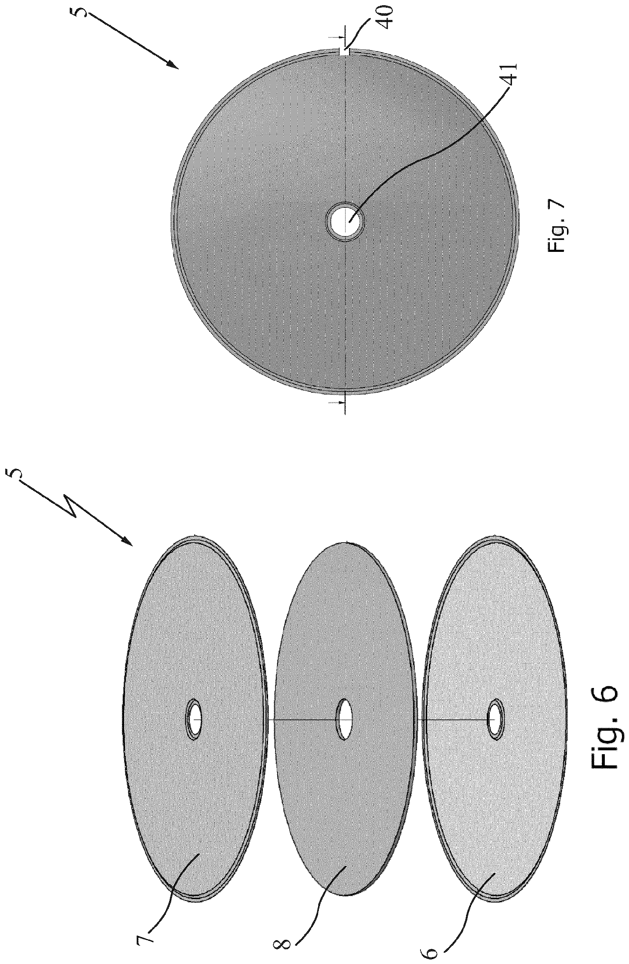

Inside the container 2, a plurality of closed cells 5 is housed, each delimited by at least one anionic membrane 6 and by at least one cationic membrane 7, and such membranes are perimetrically sealed to each other with interposed first spacing means 8 as indicated in figure 6.

The sealing can occur for example via perimeter gluing, via ultrasound welding, through a thermo-lamination or even only via compression of the perimeter edges, one against the other, suitably with increased thickness or provided with folds.

The closed cells 5 are therefore obtained by sealing together a cation-exchange membrane 7 and an anionic exchange membrane 6, interposing the first spacing means 8 advantageously constituted by a mesh, or by a spacer support, preferably substantially non-compressible, in order to define the volume of the closed cell 5 between the two membranes 6 and 7. In this volume, the storage of the particles occurs in operation, and in particular, in the case of water to be desalinated, of the ions as better described hereinbelow.

Inside the container 2, a plurality of open cells 9 are housed which are traversed by the liquid flow F to be treated. Each open cell 9 is delimited by an anionic membrane 6 and by a cationic membrane 7 of two adjacent closed cells 5, between which the open cell 9 itself is interposed. The open cell 9 in turn comprises second spacing means 10 placed to separate the anionic 6 and cationic 7 membranes of two consecutive cells 5.

The first spacing means 8 are advantageously constituted by a mesh having thickness comprised for example in the 0.1 to 4 mm interval.

The second spacing means 10 are also advantageously constituted, for example advantageously, by at least one mesh having a thickness comprised between 10 micron and several millimeters and preferably between 50 micron and 400 micron and still more preferably having a thickness between 100 and 200 micron.

Of course, without departing from the protective scope of the present patent, the first or the second spacing means can be made with one or more sheet-like supports susceptible of being traversed by the liquid at least in their lying plane, i.e. with a permeable layer constituting part of a same membrane 6, 7. The meshes 8 and 10 are shaped in order to allow the traversing of the liquid in the lying plane of the mesh itself.

In particular, the apparatus 1 comprises at least one stack 60 of cells 5, 9 arranged in sequence one after the other between two end cells placed at two corresponding opposite ends of the stack 60 itself. Preferably, the aforesaid end cells are constituted by corresponding open cells 9.

In the stack 60, the closed cells 5 are arranged alternated with the open cells 9 along the extension of the stack 60 itself, in which in particular each open cell 9 (except for the end cells) is arranged between two adjacent closed cells 5.

The apparatus 1 then comprises at least two electrodes 11 and 12 associated with the two end cells contained in the container 2, advantageously constituted by two open cells 9, and connected to electrical power supply means 13 adapted to supply them with a direct supply voltage $V_A$.

The electrodes 11, 12 are advantageously for example constituted by graphite plates, which are supplied by the power supply means 13 with direct voltage proportional to the number of closed cells 5 present in the apparatus 1.

With the expression direct voltage, it is intended that the power supply means 13 supply the aforesaid electrodes with the negative and positive voltages with constant direct supply or with pulsed supply having average value of the voltage respectively positive and negative. In the latter case, the pulsed voltage between the facing electrodes will have average value proportional to the operating voltage that one intends to supply to the electrodes, but it will be supplied through the switching of a switch controlled by a PWM control module of a control circuit that preferably comprises an electronic circuit board provided with CPU, which modulates the width of the pulses of the pulsed voltage applied to the electrodes. This generates an electric field between the electrodes capable of efficiently attracting the ionized particles present in the liquid towards the electrodes with polarity opposite thereto. Also the pulsating voltage rectified through a diode bridge or by means of a synchronous rectifier, driven at predetermined time intervals by the logic unit, is intended as direct voltage.

Advantageously, each of the terminal electrodes 11, 12 faces a corresponding open cell 9. Preferably, these electrodes 11, 12 can be made of graphite or of graphite with porous carbon coating or of metal or of metal coated with noble metal oxides, or in any case of the materials that normally constitute the electrodes of the ED systems.

Preferably, each electrode 11, 12 faces a corresponding membrane 6, 7 of the closed cell 5 adjacent to the end cell, with which the electrode 11, 12 is associated.

In particular, one of the electrodes 11, 12 faces one of the cationic membranes 7, and the other of the electrodes 11, 12 faces one of the anionic membranes 6.

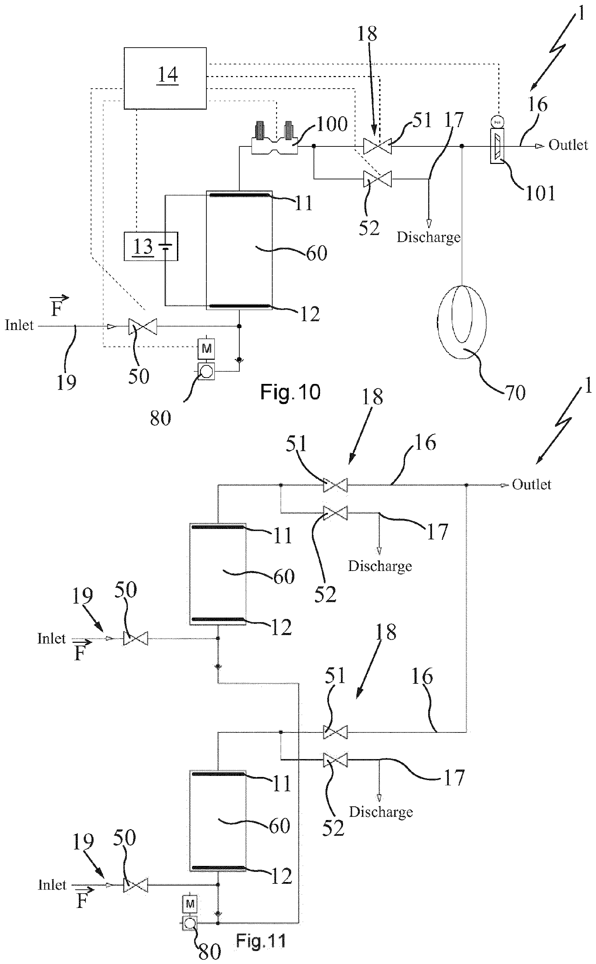

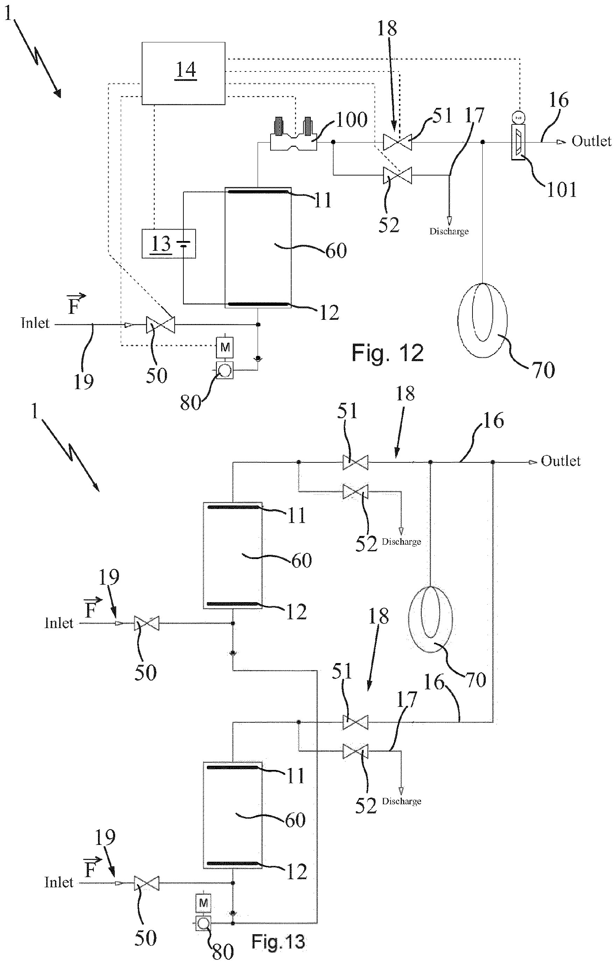

An electronic control unit 14 (illustrated only in figures 10 and 12, but of course also intended in the embodiments of figures 11 and 13) is provided, which is connected to the electrical power supply means 13 in order to alternately control the polarity reversal thereof between a first (operating) polarity and a second (regeneration) polarity, of sign opposite the first and of value preferably as specified hereinbelow equal to or greater than the first.

Said control unit 14 can also optionally vary the value of the applied voltage and of the current that flows in the circuit, as indicated hereinbelow.

As is known, with the term cationic membrane (indicated with 7 in the embodiments), it must be intended a membrane provided with a negative intrinsic charge and hence susceptible of being crossed by positive ions (cations); while with the term anionic membrane (indicated with 6 in the embodiments) it must be intended a membrane provided with positive intrinsic charge and hence susceptible of being crossed by negative ions (anions).

The first polarity places the electrodes 11, 12 to assume a charge of sign opposite that of the membranes 6, 7 of the closed cells 5 to which they are facing, in order to force the ionized particles present in the treatment liquid F contained inside the open cells 9 to pass inside the closed cells 5 through the anionic 6 and cationic 7 membranes and not be able to leave therefrom.

The second polarity places the electrodes 11, 12 to assume a charge of sign equivalent to that of the membranes 6, 7 of the closed cells 5 to which they are facing, in order to force the ionized particles present inside the closed cells 5 to pass inside the open cells 9 through the anionic 6 and cationic 7 membranes, not being able to return into the adjacent chambers 5.

Therefore, the liquid flow to be treated F passes into the apparatus 1 from the inlet opening 3 to the outlet opening 4, traversing the open cells 9 and flowing in contact with the anionic 6 and cationic 7 membranes that delimit the closed cells 5 so as to exchange therewith the charged particles in the provided operating and regeneration phases corresponding to the two polarities assumed by the electrodes 11 and 12 and as better specified hereinbelow.

In particular, (following the first operating polarity), both the positive charged particles (through the cationic membranes 7) and the negative charged particles (through the anionic membranes 6) enter into the closed cells 5.

Advantageously, the anionic membrane 6 and the cationic membrane 7, which delimit the corresponding closed cell 5, between them define at least one volume (in which in particular the first spacing means 8 are housed) into which (following the first operating polarity) both positive charged particles and negative charged particles are susceptible of entering.

Preferably, the cells 5, 9 of the apparatus 1 (except for the end cells) are not associated with electrodes supplied by the electrical power supply means 13 (in particular in the sense that such cells 5, 9 are not delimited between corresponding pairs of electrodes supplied by the electrical power supply means 13). In particular, the closed cells 5 are not associated with electrodes supplied by the electrical power supply means 13.

The apparatus 1 advantageously also arranges a first conduit 16 for the extraction of purified liquid, and a second conduit 17 for the discharge of liquid with concentration of ionized particles, and such conduits 16 and 17 are respectively connected to the outlet opening 4 through interception means 18.

The latter are connected to the control unit 14 in order to control the selective passage of the liquid flow F, which has entered into the apparatus 1 through a supply conduit 19 connected to the inlet opening 3, in the first conduit 16 or in the second conduit 17 in order to be destined for the user, in the case of work of the apparatus during the operating phase or for discharging, in the case of work of the apparatus during the regeneration phase.

The control unit 14 is in fact in operation susceptible of controlling the interception means 18 between an operating phase, in which they connect the outlet opening 4 to the first conduit 16 for the extraction of the liquid purified with the electrodes 11, 12 charged by the electrical power supply means 13 to the first operating polarity; and a regeneration phase, in which they connect the outlet opening 4 to the second conduit 17 for the discharge of the liquid, with the electrodes 11, 12 charged by the electrical power supply means 13 to the second regeneration polarity.

In operation, the control unit 14 alternately controls the polarity reversal of the electrodes 11, 12 such that the ionized particles that have remained stored and confined due to the membranes 6, 7 and due to the action of the electric field during the first operating polarity are removed from the closed cells 5 during the second regeneration polarity.

More in detail, during the operating phase, in the case for example of liquid constituted by water with high conductivity due to the presence of dissolved salts, the electrode 11 is supplied with positive polarity with respect to the electrode 12. Due to the positioning of the anionic and cationic membranes 6, 7 in the closed cells 5, desalination occurs from the open chambers 9 traversed by the liquid to be treated F, which crosses them by passing through the mesh of the second spacing means 10.

After a certain operating period of the apparatus in operating condition, which is connected to the flow rate of liquid to be treated F, to its salinity as well as to the size of the closed cells 5, i.e. to their capacity to receive new charged particles without having them precipitate and without decreasing the selectivity of the membranes 6 and 7, it is necessary to proceed with a regeneration phase. This consists of the reversal of the polarity and of the connection to the discharge second conduit 17 of the outlet opening 4 of the treated water F.

In this new condition, the charged particles, i.e. the ions, once again cross the corresponding ion-exchange membranes 6, 7, being concentrated in the open cells 9, from which a flow of water transports the charged particles (the ions in the case of the water to be softened) thus concentrated to the discharge second conduit 17.

Given the small volume of the flow channels of the open cells, which as mentioned above have a thickness comprised between 10 micron and several millimeters, the quantity of water necessary for transferring the concentrated charged particles to the discharge second conduit 17 is very small and a continuous limit flow can be applied, or, preferably, a series of brief pulses of liquid can be applied alternated with periods without flow, in which the ions have the time to "emerge" from the membranes 6, 7 in order to be evacuated. In any case, the recovery percentage (defined as desalinated water / total water used) can be very high.

In order to speed up the regeneration operation, i.e. the extraction of the charged particles from the closed cells 5, it is possible to increase the voltage applied during the regeneration phase with respect to that used during the operating phase in which the desalination occurs; in this manner, one will obtain a higher current flow and hence a lower regeneration time with respect to that necessary during the operating phase.

With respect to a conventional electrodialysis apparatus or with respect to a reverse electrodialysis apparatus, the apparatus 1 according to the invention provides for eliminating the open concentration cells, substituting them with a plurality of isolated closed cells 5 that act as a "tank" for the charged particles (e.g. ions) that one wishes to remove from the liquid F.

In accordance with the idea underlying the present invention, the apparatus also comprises at least one polymer substance 15 having functional groups with non-zero electric charge, which is contained inside the closed cells 5 and is susceptible of creating bonds with the charged particles of the liquid flow F that enter into the same closed cells 5 by crossing the anionic 6 and cationic 7 membranes.

The aforesaid polymer substance 15 is selected from among a polyelectrolyte of poly-acid, poly-basic or poly-amphoteric type, an ion-exchange resin or a combination thereof.

The high molecular weight of the chains of these polymer substances prevents the passage thereof through the ion-exchange membranes 6, 7 in the regeneration phase.

Among the polymer substances employable for such purpose, high molecular weight dispersing substances are to be included, for example: Polyacrylic acid, Sodium polyaciylate, Chitosan, Polyacrylamide, PCE (Polycarboxylate ether superplasticizers), and similar substances.

Advantageously, in accordance with a particular embodiment, the polymer substance 15 is made of nonconductive material.

The general object of these substances is that of maintaining possible precipitation in the micelle state, stabilizing the surface charge and preventing aggregations, as well as that of creating direct chemical bonds with the salts that enter into the chambers 5.

In these conditions, the creation of chemical bonds between the salts that enter into the chambers and the polymer substances totally eliminate or in any case limit a possible formation of precipitate in the operating phase, which becomes more easily reversible in regeneration phase and is in any case easily dissolved again in a cleaning phase, specified hereinbelow.

The general object of the use of these substances is that of acting on the recombination of the ions inside the chambers. The cations and the anions in fact enter into the chamber through the opposite membranes 6 and 7. In these conditions, there can easily be imbalance in the local composition, which in addition to the increase of concentration could lead to the precipitation of salts that are not very soluble. The presence of a polyelectrolyte that contains immobilized ion groups in any case tends to coordinate, with physical chemical bonds, the ions of opposite polarity whether they are free or already in molecules of precipitates, also by acting as a stabilizing buffer.

The charged particles in any case form bonds with the polyelectrolyte, strong or weak, which prevent further precipitation or aggregation of the precipitated salts.

Let's imagine, for example, treating water that essentially contains calcium bicarbonate in the presence of polyacrylic acid in the closed cell 5. The ions Ca++ will enter into the closed cell 5 through the cationic membrane 7 and the ions HCO3- through the anionic membrane 6. The calcium ions will tend to be coordinated in the vicinity of the negative carboxylic groups of polyacrylic acid. This fact will prevent the precipitation of the calcium bicarbonate. In the subsequent regeneration phase, the calcium ions will instead be free to leave the closed cell 5 through the cationic membrane 7. The quantity of polyacrylic acid can be computed on the basis of the quantity of poorly-soluble ions that are expected to be removed in a cycle.

The concentration of the polymer substances inside the closed cells 5 must in any case remain rather low and, preferably, below 5-10 grams / liter in order to prevent an excessive increase of the viscosity of the water inside the same closed cells 5 which could lead to a poor mixing and redistributing of the ions. Nevertheless, in some applications for the treatment of specific solutions, it could become advantageous to raise the concentration of these charged particles inside the closed cells 5 in order to limit or avoid mixing.

These polymer substances 15 in fact can also be seen as a set of chains with a defined polarity. For example, as already described above with the polyacrylic acid (which has a high number of carboxylic groups immobilized in the polymer chain), it is possible to (at least partially) coordinate the Ca++ ions, preventing their precipitation inside the closed cell 5.

In accordance with an advantageous embodiment of the present invention, first elastically yielding means 20 are provided for, which are contained inside the closed cells 5 in order to elastically respond to pressure difference variations, to which the anionic 6 and cationic 7 membranes are subjected.

More clearly, during operation, as a consequence of the movement of the ions, a certain quantity of water is inevitably transported through the membranes of the closed cell 5 - both entering, during the operating phase, and exiting, during the regeneration phase. Even if the absolute quantity of water that passes is limited, in order to avoid stress and long-term damage to the membranes 6, 7 it is still preferable to use the first elastically yielding means 20 in order to compensate for the aforesaid pressures; such first means 20 are inside the closed cell 5 and are capable of varying their volume based on the pressure present.

The elastically yielding means also have the function of compensating for sudden variations of the water pressure.

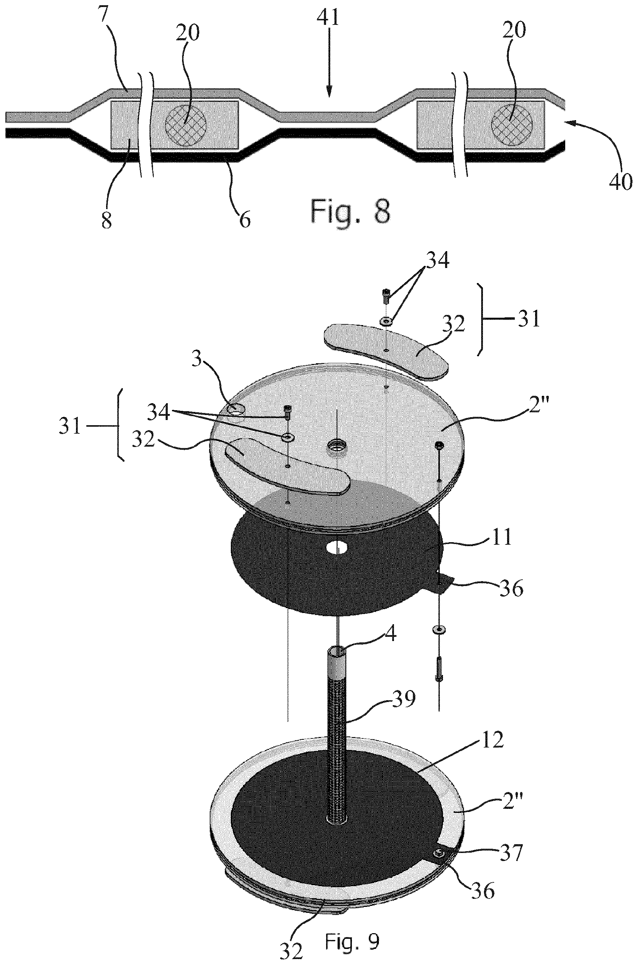

One example of first elastically yielding means 20 is constituted by balls or pieces of a closed-cell foam material capable of containing a gas (e.g. air or nitrogen), as for example is schematically indicated in figure 8.

Another example is given by polyurethane foam, or in a very inexpensive manner by spherules of polystyrol foam.

If salt precipitation takes place within the closed cells 5, for example because the operating phase has taken too long and the concentration inside the closed cells 5 has risen up to the point where the salts (e.g. calcium and/or magnesium bicarbonates) precipitate, it may be necessary to conduct a cleaning phase, i.e. descaling phase (conducted with the modes described below), for example through an acid that could lead to the formation of gas and to a consequent increase of the pressure inside the closed cell 5.

Also in this case, therefore, the presence of such first elastically yielding means 20 would be beneficial. In accordance with a different embodiment of the present invention, at least one hole 40 may be made (in addition to or in substitution of the first elastically yielding means 20), for example by omitting the welding or gluing in the perimeter of the membranes 6, 7, allowing an exit for possible gases.

In accordance with a preferred characteristic of the invention, the apparatus 1 is further provided with second elastically yielding means 21 inserted in the container 2 and substantially aligned with the succession of closed or open cells 5, 9. These are for example interposed in the succession of closed cells 5 or open cells 9, i.e. between two cells in succession, in order to elastically respond to pressure variations to which the anionic 6 and cationic 7 membranes are subjected, and in order to compensate for volume variations of the closed cells 5 following the absorption or desorption of liquid and/or of charged particles.

The second elastically yielding means 21 can also be associated with an end cover 2" or with an electrode 11, 12.

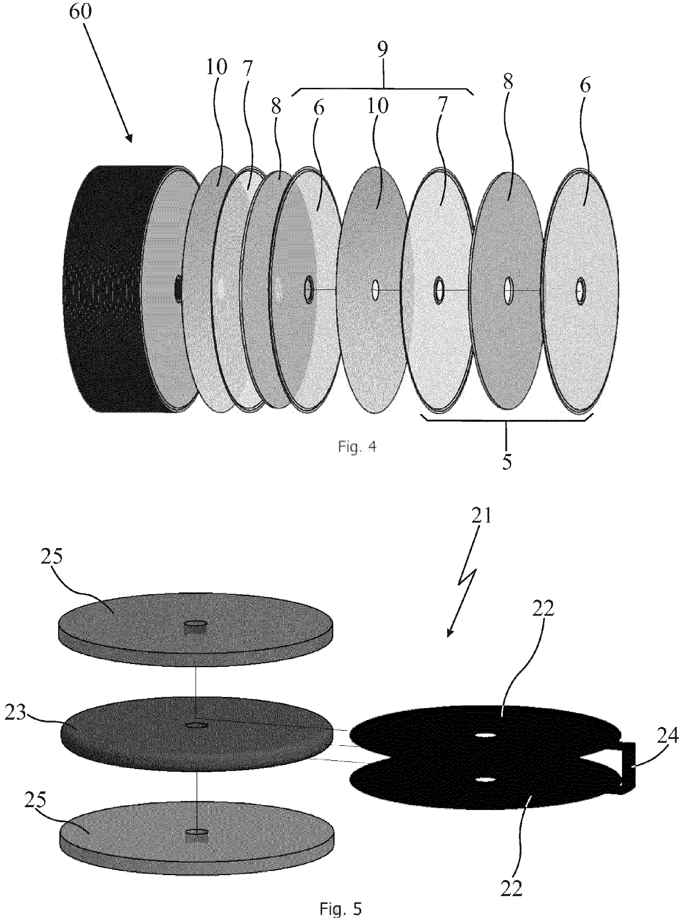

Advantageously, as illustrated in figure 5, the second elastically yielding means 21 comprise two layers of electrodes 22, with an elastically yielding layer 23 interposed. The two layers of electrodes 22 are electrically connected to each other for example by means of a bridge 24 integrally made with the two layers of electrodes 22, e.g. made of graphite. Preferably, between each electrode layer 22 and the adjacent cell, advantageously an open cell 9, a rigid support layer 25 is interposed in order to prevent deformations of the electrode layer 22.

As for the terminal electrodes 11, 12, it is possible to use materials different from graphite for the purpose of optimizing the electrical contact.

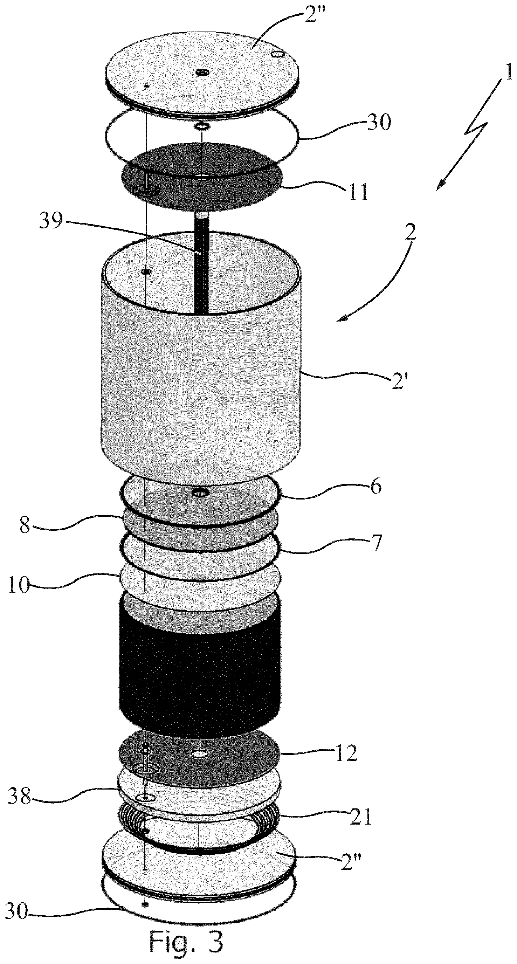

The second elastically yielding means 21 are indicated in the drawing of figure 3 with a spring, which provides an optimal compression to the stack of cells 5, 9. In this embodiment, a spring was used though a closed-cell rubber foam element can instead be used that is able to provide an elastic compression effect. Or, a member element can be used that is pressurized by a fluid (e.g. compressed air) or, simply, even an elastic material layer like silicone can be used.

The embodiment with the spring being relatively costly, it is preferably not selected, the above-described embodiment with two rigid support layers 25 being preferable, having an elastically yielding layer 23 interposed therein and two layers of electrodes 22 externally arranged in adherence thereto.

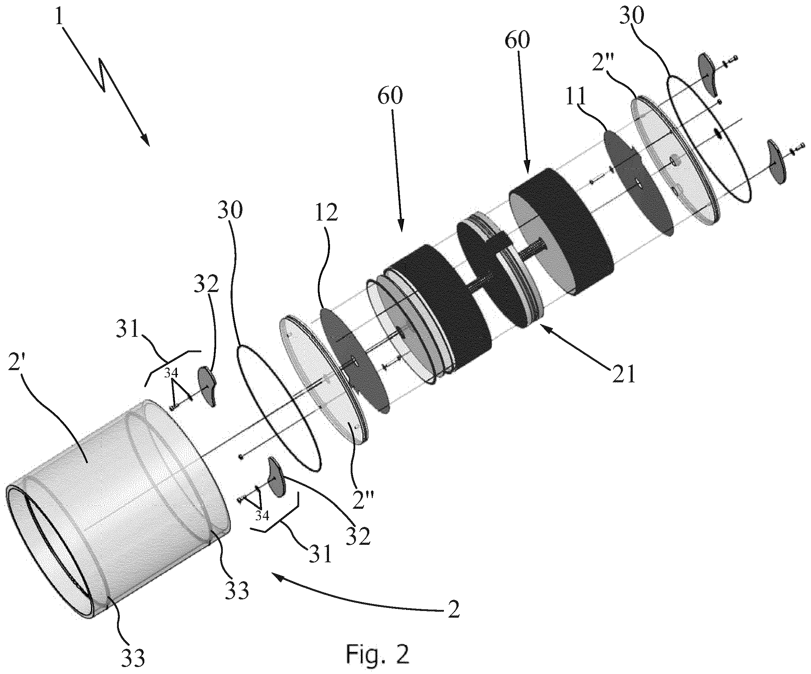

In accordance with the preferred but non-limiting embodiment illustrated in particular in figures 1-4, the container 2 has cylindrical shape and the two end covers 2" have circular form, are provided with gaskets 30 for the hydraulic seal of the aforesaid covers 2" on the side wall 2' of the container and retention means 31 for mechanically stopping the covers 2" in position with respect to the side wall 2'.

For example, such means 31 are constituted by plates 32 which are inserted in seats 33 annularly made in the internal surface of the side wall 2' and fixed to the covers 2" by means of screw means 34.

The electrodes 11 and 12 are for example obtained from two sheets of graphite 4 and 4' which, by means of a projection 36 radially projecting from the external peripheral edge and by means of electrically conductive screws 37 that reach the outside of the container 2, allow the connection to the electrical power supply.

Advantageously, as illustrated in figure 3, a guide can be provided for making an abutment for the stacking of the stack of cells 5 and 9.

Preferably, the apparatus comprises an internal conduit 39 for the transport of the treated liquid F towards the opening 4 of the apparatus 1. This is made in accordance with the embodiment of the enclosed figures, and in particular as illustrated in figure 9, by a central pipe with multiple holes to which the liquid coming from the open cells 9 is conveyed.

The base plate 38 provides for a housing for the central pipe 39 that facilitates the stacking of the stack of cells 5, 9, one on the other. Such stacking occurs by inserting closed cells 5 composed of two membranes with opposite polarity 6, 7, advantageously of circular form, joined together with the first spacing means 8 interposed as described above. Each closed cell 5 is followed by second spacing means 10 (e.g. constituted by a mesh) which constitutes the flow channel for conveying the liquid to be treated.

Of course the circular form is non-limiting and it is indeed possible, for example, to use membranes with quadrangular or polygonal form, even while inserting the stack in the cylindrical container 2. The polygonal form allows the best use of the membrane sheets during production, reducing waste; in addition, it allows making the inlet opening at the middle position of the edge of the membrane more spaced from the side wall 2', so as to distribute the liquid to be treated F over the entire height of the stack of the apparatus 1.

This packing is repeated for the number of times provided, until the complete stack of the apparatus 1 is created.

The central pipe 39 is optionally and advantageously inserted in the hole of the closure cover 2" until it exits with its outlet opening 4 in order to create the outlet conduit for the treated water.

The inlet opening 3 for the water to be treated F occurs from one of the two end covers 2" or even from a hole on the side wall 2'.

The supply conduit 19, only indicated in the schematic figures of the hydraulic circuit, is connected to the inlet opening 3 in order to bring the liquid to be treated to the apparatus 1. Having entered through such inlet opening 3, for example made on an end cover 2", the liquid to be treated F, e.g. water with high salinity, is circumferentially distributed around the external perimeter of the entire stack of cells and from here it penetrates into the second spacing means 10, i.e. it crosses the open cells 9, touching the membranes 6, 7 of the closed cells 5 and being desalinated during the operating phase and enriched with salts and more generally charged particles during the regeneration phase.

The liquid thus treated thus passes from the open cells 9 to the central pipe 39 in order to reach the outlet opening 4, from which it is directed through preferably a common section, and selectively by means of the interception means 18, to the first conduit 16 for the extraction of the purified liquid or to the second conduit 17 for the discharge of the liquid with concentration of ionized particles.

In accordance with the embodiment of figures 6-8, each closed cell 5 is delimited by two ion-exchange membranes with opposite polarity 6, 7 with first spacing means 8 inside, e.g. constituted by a plastic mesh. Both the membranes 6, 7 and the mesh are perforated at the center in order to allow the passage of the central pipe 39. The mesh 8 is substantially and preferably non-compressible or in any case being rather rigid it is able to put forward substantial resistance to the compression, so as to define a volume for the accumulation of charged particles. The mesh 8 in fact spaces the membranes 6 and 7, creating a storage volume of the closed cell. This volume, during operation, is filled with liquid.

The membranes 6 and 7 are sealed together (e.g. glued) both at the external perimeter and at the central hole indicated with 41 in figure 7.

As indicated above, the closed cells 5 are advantageously provided with at least one hole 40 (see figures 7 and 8) in order to limit the internal overpressure and allow gas evacuation, for example obtained by omitting the sealing of the membranes for a peripheral section thereof.

Also forming the object of the present invention is a method for purifying a fluid in particular by means of an apparatus of the above-described type regarding which, for the sake of descriptive simplicity, the same reference numbers and nomenclature will be maintained hereinbelow.

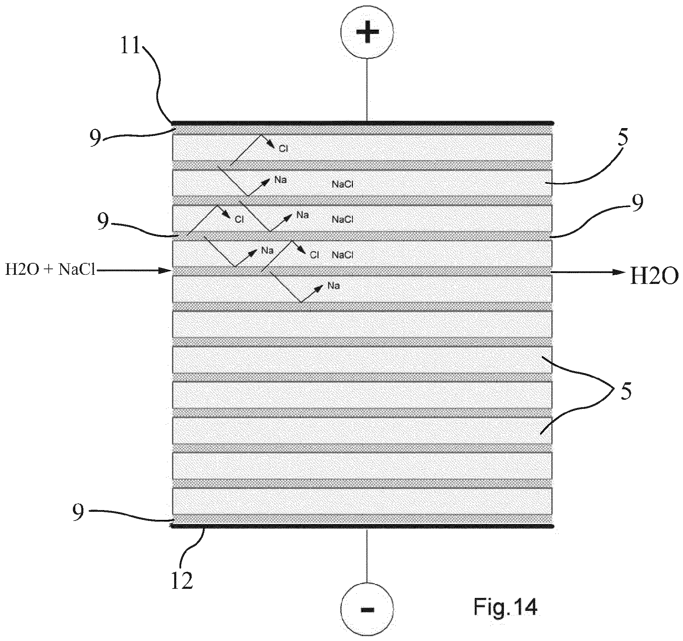

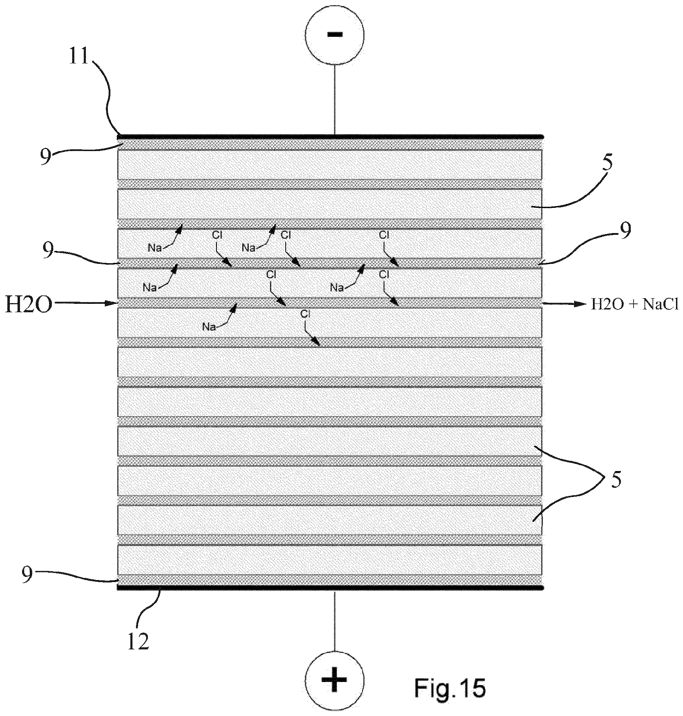

The aforesaid method provides for the cyclic repetition of an operating phase and of a regeneration phase controlled by the control unit 14 as schematically illustrated in figures 14 and 15 with reference to the passage of ions through the membranes 6, 7.

More in detail, the latter alternately controls the polarity reversal of the electrodes 11, 12 between an operating phase (figure 14 relative to an example of desalination of water with NaCl), in which the electrodes 11, 12 are charged to a first polarity opposite that of the membranes 6, 7 of the closed cells facing the electrodes, in order to force the ionized particles present in the treatment liquid contained inside said open cells 9 to pass inside the closed cells 5 through the anionic and cationic membranes 6, 7, and a regeneration phase (figure 15), in which the electrodes 11, 12 are charged to a second polarity equal to that of the membranes 6, 7 of the closed cells 5 facing the electrodes 11, 12, in order to force the ionized particles present inside the closed cells 5 to pass inside the open cells 9 through the anionic and cationic membranes 6, 7.

In particular, with reference to the example of figure 14, during the operating phase, the positive charged particles that flow into each open cell 9 are moved (following the first polarity) into the adjacent closed cell 5 through the cationic membrane 7 that separates the open cell 9 from the closed cell 5 and are retained in such closed cell 5 by the anionic membrane 6 of the latter, while, analogously, the negative charged particles that flow into the open cell 9 are moved (following the first polarity) into the other adjacent closed cell 5 through the anionic membrane 6 that separates the open cell 9 from such other closed cell 5 and are retained in this other closed cell 5 by the cationic membrane 7 of the latter.

With reference to the example of figure 15, during the regeneration phase, the positive charged particles present in each closed cell 5 are moved (following the second polarity) into the adjacent open cell 6 through the cationic membrane 7 that separates the closed cell 5 from the open cell 6 and are retained in such open cell 9 by the anionic membrane 6 of the latter, while, analogously, the negative charged particles present in the closed cell 5 are moved (following the second polarity) into the other adjacent open cell 9 through the anionic membrane 6 that separates the closed cell 5 from such other open cell 9 and are retained in this other open cell 9 by the cationic membrane 7 of the latter.

According to the idea underlying the present invention, the method provides that the control by the unit 14 is achieved by providing that, during the operating phase, a polymer substance 15 contained inside the closed cells 5 and having functional groups with non-zero electric charge forms chemical bonds with the charged particles of the liquid flow, preventing the precipitation thereof.

Advantageously, the control by the unit 14 of the electrical power supply provides for measuring, through a current meter connected to the control unit 14, the current absorbed over time by the electrical power supply means 13 and determining from the current measurement the quantity of charge absorbed over time by the electrical power supply means 13. This is proportional to the charged particles stored in the closed cells 5 and consequently also to the residual water purification capacity based on the capacity of the closed cells 5 to receive other charges.

At this point, the method provides for comparing, due to the control unit 14, such residual capacity value with the consumption demand provided in a consumption curve stored in the same control unit. Consequently, the control unit 14 controls, in response to the aforesaid comparison, in particular according to a programmable logic, the regeneration of the apparatus 1.

More in detail, the quantity of ions "extracted" during the regeneration is approximately and on average substantially equal to that retained during the operating phase.

Faraday's constant indicates, as is known, the total quantity of electric charge of a mole of elementary charges and represents the product between the Avogadro constant NA $\approx 6.022 \times 10^{23}$ mol$^{-1}$ and the elementary charge e $\approx 1.602 \times 10^{-19}$ C.

$$F = 96.485,3365(21) \, C \, mol^{-1}$$

In the above-reported formula, the coulomb (symbol C) is the unit of measure of the electric charge and it is defined in terms of ampere. 1 coulomb is the quantity of electric charge transported in 1 second by the current flow of 1 ampere:

$$1 \, C = 1 \, A \cdot s$$

It is therefore possible to join together the integrals of the current provided to the cell both in the operating phase and in the regeneration phase, except for a factor tied to the current use efficiency.

$$I_{m1} * \Delta t_s * \varepsilon_1 = I_{m2} * \Delta t_r * \varepsilon_2$$

Where:

Im1 is the average current during the operating phase
ts is the duration of the operating phase
Im2 is the average current during the regeneration phase
tr is the duration of the regeneration phase
The two efficiencies $\varepsilon 1$ and $\varepsilon 2$ during the two operating and regeneration phases are generally different from each other.

The control unit 14 of the apparatus 1 takes under consideration the actual current quantity provided to the closed cell during the operating phase and deduces (net of the efficiencies) the quantity of current to be provided during the regeneration phase.

The difference between the two quantities of current is proportional to the actual quantity of ions contained in the storage cells and hence, once the maximum storage capacity has been established, to the residual storage capacity of the closed cells 5 and thus of the apparatus 1.

Therefore, the control unit 14 - knowing the efficiency of the transfer of charges into the closed cells 5, and knowing the current over time due to the current meter (ammeter) - is able to evaluate at any moment the residual capacity of the cells 5 to absorb new charged particles, having defined a total capacity limit, e.g. 4 grams/liter selected in order to account for the maximum concentration for preventing precipitation or for preventing a deterioration of the selectivity of the membranes 6, 7 due to excessive concentration. Knowing such residual capacity value, the control unit can decide, on the basis of a preset logic, to pass to the regeneration phase by reversing the polarity and through interception means 18 switching the passage from the first conduit 16 for the extraction of purified liquid to second conduit 17 for the discharge of liquid with concentration of ionized particles.

Consequently, the control unit 14 controls, in response to the aforesaid comparison, in particular according to a programmable logic, the regeneration of the apparatus 1.

The preset logic can as stated provide for the comparison of the residual capacity, at that moment of the day, with the consumption demand expected at that moment in a consumption curve stored in the same control unit 14.

For example, if a small water consumption event is expected, the logic can delay the regeneration phase until after having carried out such consumption, after having verified that the residual capacity is sufficient for meeting such request.

Otherwise, in the case of an expected large consumption event, the logic can provide for controlling the regeneration phase even if only a small part of the capacity of the closed cells 5 has been used.

The consumption curve is determined by means of measurement with a flow meter 101 (see figure 10) connected to the conduit that supplies liquid to the user. In particular, this is obtained for example by means of the average over time quantities predefined and/or predefinable over multiple consumption days. Such time quantities can, within the limits of the processing capacity of the control unit 14, tend towards zero in order to improve the precision of the provision. The consumption curve can advantageously be computed with a variable average, i.e. it can correspond to the average of a predefined number of prior days updated each day.

The data that conditions the control by the logic unit 14 and which in the above-indicated example refers to a consumption curve, may optionally be remotely sent in order to build a specific data base of the apparatus and/or a unified data base, for example by geolocating it.

Nevertheless, the consumption curve can then be optionally reprocessed through artificial intelligence algorithms or expert systems executed on the control unit 14 or on remote systems through a suitable data communication channel.

Once the consumption curve is obtained by means of one or more of the (for example) abovementioned algorithms, the response of the apparatus, intended as mode for controlling the operation of the cells, can be processed locally by the control unit 14 or processed on a remote system and received by means of the abovementioned data communication channel. This possibility makes the control unit 14 less expensive, since it can have a more limited processing power and the delocalized processing allows a more precise provision algorithm, since it potentially has a wider data base, not just limited to a single user. In addition, the availability of a global data base allows adapting the response of the system to weather and social-economical events that are global or specific for the zone where the apparatus is installed, for example failures of the water supply system, earthquakes, floods or generically events where a reduction of the overall water consumption is for example suitable.

The unit 14 can also act on the value of the voltage and/or current applied to the stack in order to make closed cycle for feedback regulation of the conductivity obtained at the outlet of the apparatus. The regulation parameters of this closed cycle can optionally also be obtained by means of the abovementioned data communication channel. This conductivity is measured by means of at least one suitable conductivity meter 100 (see figure 10) placed at the outlet of the stack, connected to the outlet opening 4 and placed to intercept the first conduit 16 for the extraction of purified liquid and/or the discharge second conduit 17 depending on the functionalities requested for the control of the apparatus by the control unit 14.

In an entirely similar manner, the control unit 14 can also regulate the value of the current/voltage and the intermittence or the absolute value of the flow at the discharge on the basis of the conductivity read during the regeneration and optionally also on the parameters received by the remote system.

This behaviour can be considered positive since it allows on one hand limiting the consumption of water during regeneration to the minimum necessary, and on the other hand prevents excessive concentrations that can cause precipitation.

Each regeneration phase corresponds with a certain loss of water in the discharge second conduit 17 and a certain consumption of energy. Even though, in order to regenerate the closed cells 5, less time and hence less washing water are necessary if the cells are only partially depleted (still having a considerable residual capacity) with respect to the case in which the cells are completely depleted, nevertheless however frequent regenerations involve a greater consumption of water overall, in particular due to the increased consumption for starting and terminating the numerous single regenerations.

A parameter can be advantageously provided for, in particular settable by the user or optionally obtainable by means of a local or remote artificial intelligence algorithm, which indicates the propensity to always have the apparatus 1 with the closed cells 5 in their maximum residual state (and hence with availability for a greater consumption of water for regenerating the closed cells 5 as soon as possible) i.e. the propensity for a greater savings of water, which however leads to a lower availability of residual capacity of the closed cells 5 at any moment of the day. Such parameter can optionally take under consideration the costs for the consumption of water and energy, when differentiated by time periods, in order to optimize the operating cost of the apparatus.

In figures 10-13, schematic hydraulic circuits are reported of four different embodiments of the apparatus 1, object of the present invention. In such figures, 60 indicates the stack of cells in succession.

In accordance with the diagram of figure 10, the supply conduit 19, the extraction first conduit 16 and the discharge second conduit 17 are respectively intercepted by a first, by a second and by a third solenoid valve 50, 51 and 52.

The aforesaid valves are controlled by the logic control unit 14 which in particular switches the second and the third valve 51 and 52 for the operating and regeneration phases at the same time as the polarity reversal. The first valve 50 is controlled to open both for the operating phase and for the regeneration phase. For the latter phase, as indicated above, the opening can only occur for brief time intervals in order to expel the charged particles that have crossed the membranes 6 and 7, not being necessary to keep open the water passage for the entire time of the regeneration phase.

The complete regeneration phase for restoring the complete capacity of the closed cells 5 will advantageously have a variable duration.

During the regeneration, it is in fact possible for the possibility to use a continuous flow (possibly reduced with respect to the operating flow), as well as an intermittent flow, thus reducing the discharge volume. The apparatus also advantageously provides for the possibility of introducing, inside the container 2, a dose of solubilizing product by means of injection means 80, such product for example stored in a suitable tank not illustrated in the enclosed figures.

With the term "solubilizing product" it must be intended any one product, advantageously in particular available in a solution for an easy introduction in the container 2, susceptible of increasing the solubility of the specific ionized particles with which it is intended to interact in the provided application, increasing the precipitation threshold thereof. This will therefore be for example constituted by a solution containing a counterion capable of inhibiting, within certain limits, the precipitation of the ion contained in the fluid to be treated and thus constituted it can be formed by an acidic solution for the solubilizing of carbonates or calcium salts.

The aforesaid injection means 80 are for example obtained with a peristaltic pump which provides for injecting, at predetermined intervals, a small quantity of the aforesaid solution of solubilizing product.

In operation, the control unit 14 can provide for a periodic phase of descaling with the relative injection of a small quantity of solubilizing product.

Such phase will occur at variable intervals, both after cycles of numerous operating and regeneration phases and for example at night or when the control unit 14 has verified a drop of the performances of the apparatus, also after the regeneration phase, detecting an excessively limited passage of current due to an encrustation of the membranes 6, 7 or based on the suggestions of local or remotely-executed artificial intelligence algorithms.

The frequency of this descaling phase is of course also tied to the composition of the treated water.

This descaling phase can be advantageously conducted according to one of the modes proposed hereinbelow, both as an alternative and in combination: injection and diffusion without passage of current; injection with passage of current at operating polarity; deep regeneration.

The first mode is obvious and has the function of dissolving possible encrustations present outside the closed cells 5. Preferably, the solubilizing product is injected in a particularly concentrated form in the container 2 and left herein for a descaling interval (e.g. of at least 2 minutes) with the valves 50, 51 closed and the valve 52 optionally open in order to prevent gas concentrations, in order to allow the same solubilizing product to exert its action and the charged particles to be dissolved by the membranes inside the solution of solubilizing product. At the end of the aforesaid descaling interval, the supply is opened (valves 50 and 52) for sending the solubilizing product to the discharge conduit.

The second mode has the object of "introducing", inside the closed cells 5, the solubilizing product which once it has reached the interior of the closed cells 5, provides for dissolving possible deposits.

This mode occurs by supplying the cell with the operating polarity, allowing the solubilizing product to cross the ion-exchange membranes 6 and 7.

The third mode provides for removing, in the most complete manner, the saline/acid/base content present inside the closed cells 5.

In this mode, for the purpose of the regeneration phase, the reduced saline concentration can lead to a diminution of the work current that transits in the stack of cells between the electrodes 11 and 12, and thus indicating to the control unit the actual zeroing of the saline content in the closed cells 5.

This operating mode can be used in the periods of lack of water consumption, in order to ensure the precision of the computing of the ion balance contained in the closed cells 5 for storing the ions.

In order to obtain a continuous flow to the user, i.e. with operating phases substantially not interrupted by regeneration phases, it is necessary to place at least two stacks of cells 60 in parallel, as indicated in the diagram reported in figure 11.

The apparatus 1 according to the invention and its operating method are adapted to be advantageously employed, due to their versatility of use, for the desalination and softening of water in a home environment.

In a home, in fact, the water consumption is not constant but subjected to brief moments in which the consumption is very high alternated with periods of non-use.

By employing two stacks of cells 60, as in the diagram of figure 11, it is possible to obtain a continuous production and, in order to optimize the size of the stack of cells 60, it is possible to exploit the rapidity of passage of one stack 60 between the operating phase and the regeneration phase. It is in fact sufficient to supply the stack to operating polarity, and preferably execute also a brief washing at full flow rate of 1-2 seconds in order to expel the latter charged particles or delay the opening of the operating valve 51, by using in order to supply the user the volume contained in the storage chamber 70, in order to make a stack of cells 60 completely operative.

It is also possible to provide that both stacks of cells are operating in parallel in order to double the peak flow rate.

The apparatus 1 according to the invention also allows subjecting the closed cells 5 to periods of "overloading" or to prolong the operating duration beyond that normally provided for meeting consumption peaks.

A typical example of this situation could be the filling of a washing machine, which takes place in a brief time period and which is then followed by a longer waiting period.

As explained above, during the operating phase there is a constant increase of the saline concentration inside the closed cells 5. The maximum duration of the operating phase is proportional to the maximum concentration admissible inside the closed cells 5.

An ion-exchange membrane exhibits good selectivity up to at least 15-20 g/l of concentration.

This value is high and would allow an optional cyclic capacity for the closed cells 5. Nevertheless, the limit of concentration is normally dictated, in most of the applications such as for retaining water for residential use, not by the selectivity of the membranes but by the solubility of the ions. Generally the salts generated by monovalent cations have no solubility problems while those generated by bivalent cations often have rather low solubility limits, for example calcium, magnesium, strontium and barium. Therefore, depending on the applications and for example in the case of use for desalinating the water for civilian use in the homes, it is necessary to limit the maximum concentration of ions (e.g. less than 5 grams / liter) inside the closed cells 5 in order to prevent precipitation that could obstruct the membranes, compromising the functionality thereof.

The presence of the above-described polymer inside the closed cells 5 increases the tolerance of the cells themselves to overloading; indeed the chemical bonds that are formed between the retained salts and the polymer reduce or prevent the precipitation tendency.

On the other hand, the possibility to prolong the operating phase can be employed for industrial uses, such as the recirculation of washing waters for treating surfaces, where the solubility of the metal ions present is normally very high given that the electrodeposition baths reach high metal concentrations.

In addition, the circumstance of being able to use an "intermittent" washing in the regeneration cycles allows obtaining a washing liquid that is particularly concentrated and hence with high reuse potentialities.

The apparatus 1 can provide for, in the operating logic of the control unit 14, extending the regeneration phase by obtaining a deep regeneration, advantageously to be actuated in the time periods of expected "non-consumption" of the water, for example at night or when the consumption curve does not provide for the use of water for a prolonged time period.

Such deep regeneration phase allows forcing the recrossing of the membranes 6, 7 of even the less noble charged particles and allows having a higher percentage of operating time of both the totally-regenerated cells, and hence arranging a greater treatment capacity reserve in order to meet consumption peaks.

In accordance with the embodiment variant of the diagrams proposed in the preceding figures 10 and 11 and as illustrated in figures 12 and 13, for the purpose of facilitating the switching of the operating and regeneration phases, maintaining a production of purified water, it is possible to insert a storage tank 70 at the outlet of the apparatus 1. Such storage tank 70 is for example a membrane tank (even of only a few liters, for example 2-10 liters) that provides for managing the absorption peak of the user for the time necessary for the regeneration phase or for placing the stacks in operation.

The solenoid valves 50, 51 that intercept the supply first conduit 16 and the extraction second conduit 17 can be of "normally open" type, i.e. which allow the passage of the fluid in the case of absence of electrical power supply. In this manner, one obtains the free passage of the water in the case of absence of electrical power supply. This characteristic is useful both in case of "black out" and in the situations in which, due to an excessive consumption of water, the capacity of both stacks of cells 60 is exploited to the maximum and hence the control unit 14 decides to remove the electrical power supply in order to prevent precipitation inside the closed cells 5.

In accordance with an operating mode of the apparatus, the control unit 14 can increase the voltage (and hence the current) in the regeneration phase. This will allow having the stack of cells 60 in operating phase for a greater percentage of time, completing the regeneration phase in a more limited time period and in any case less than that of the operating phase.

The apparatus thus conceived therefore attains the pre-established objects.

**Claims**

1. Apparatus for purifying a liquid, which comprises:

   - a container (2) provided with at least one inlet opening (3) and with at least one outlet opening (4), and susceptible of being traversed by a liquid flow (F) to be treated containing ionized particles;
   - at least one plurality of closed cells (5), each delimited by at least one anionic membrane (6) and by at least one cationic membrane (7), and such membranes (6, 7) are perimetrically sealed to each other with interposed first spacing means (8);
   - at least one plurality of open cells (9), susceptible of being traversed by said liquid flow (F) to be treated, each delimited by the anionic membrane (6) and by the cationic membrane (7) of two adjacent closed cells (5), between which the same open cell (9) is interposed and comprising second spacing means (10) placed to separate said anionic (6) and cationic (7) membranes outside said closed cells (5);
   - at least two electrodes (11, 12) associated with two end cells of said container (2) and connected to electrical power supply means (13) adapted to supply them with a direct supply voltage ($V_A$);
   - a control unit (14) connected to said electrical power supply means (13), adapted to alternately control the polarity reversal of said electrodes (11, 12) between a first operating polarity, with which it supplies the electrodes (11, 12) with a charge opposite that of the membranes (6, 7) of the closed cells (5) facing the electrodes (11, 12), in order to force the ionized particles present in the treatment liquid (F) contained inside said open cells (9) to pass inside said closed cells (5) through said anionic (6) and cationic (7) membranes, and a second regeneration polarity with which it supplies the electrodes (11, 12) with a charge equal to that of the membranes (6, 7) of the closed cells (5) facing the electrodes (11, 12), in order to force the ionized particles present inside said closed cells (5) to pass inside said open cells (9) through said anionic (6) and cationic (7) membranes;

said apparatus (1) being **characterized in that** it also comprises at least one polymer substance (15) having functional groups with non-zero electric charge, which is contained inside said closed cells (5) and is arranged for creating chemical bonds with the charged particles of said liquid which enters said closed cells (5) by traversing said anionic membranes (6) and said cationic membranes (7).

2. Apparatus for purifying a liquid according to claim 1, **characterized in that** said polymer substance (15) is selected from among a polyelectrolyte, an ion-exchange resin or a cation-exchange resin or a combination thereof.

3. Apparatus for purifying a liquid according to claim 1, **characterized in that** it comprises at least one first conduit (16) for the extraction of purified liquid, and at least one second conduit (17) for the discharge of liquid with a concentration of ionized particles, and such conduits (16, 17) are connected to said outlet opening (4) through interception means (18) connected to said control unit (14) in order to control the selective passage of said liquid flow (F) into said first conduit (16) or into said second conduit (17).

4. Apparatus for purifying a liquid according to claim 3, **characterized in that** said control unit (14) is susceptible of controlling said interception means (18) between an operating phase, in which they connect said outlet opening (4) to said first conduit (16) for the extraction of liquid purified with said electrodes (11, 12) charged to said first operating polarity; and a regeneration phase, in which they connect said outlet opening (4) to said second conduit (17) with said electrodes charged to said second regeneration polarity.

5. Apparatus for purifying a liquid according to claim 1, **characterized in that** it comprises first elastically yielding means (8) contained inside said closed cells (5) in order to elastically respond to pressure difference variations to which the anionic and cationic membranes (6, 7) are subjected.

6. Apparatus for purifying a liquid according to claim 1, **characterized in that** it comprises second elastically yielding means (21) inserted in the container (2) and substantially aligned with the succession of closed or open cells (5, 9), in order to elastically respond to pressure difference variations to which the anionic and cationic membranes (6, 7) are subjected in order to compensate for volume variations of the closed cells (5) following their absorption or their desorption of liquid and/or of charged particles.

7. Apparatus for purifying a liquid according to claim 1, **characterized in that** said closed cells (5) are provided with at least one hole (40) in order to limit the internal overpressure and allow gas evacuation.

8. Apparatus for purifying a liquid according to claim 1, **characterized in that** it comprises at least one conductivity meter connected to the outlet opening (4) of the container (2), connected to the control unit (14).

9. Method for operating an apparatus for purifying a liquid comprising:

   - a container (2) provided with at least one inlet opening (3) and with at least one outlet opening (4), and susceptible of being traversed by a liquid flow (F) to be treated containing ionized particles;
   - at least one plurality of closed cells (5), each delimited by at least one anionic membrane (6) and by at least one cationic membrane (7), and such membranes (6, 7) are perimetrically sealed to each other with interposed first spacing means (8);
   - at least one plurality of open cells (9), susceptible of being traversed by said liquid flow (F) to be treated, each delimited by the anionic membrane (6) and by the cationic membrane (7) of two adjacent closed cells (5) between which the same open cell (9) is interposed and comprising second spacing means (10) placed to separate said anionic (6) and cationic (7) membranes outside said closed cells (5);
   - at least two electrodes (11, 12) associated with two end cells of said container (2) and connected to electrical power supply means (13) adapted to supply them with a direct supply voltage ($V_A$);
   - a control unit (14) connected to said electrical power supply means (13) in order to control the supply to said electrodes (11, 12);

   wherein said method provides that said control unit (14) alternately controls the polarity reversal of said electrodes (11, 12) between:

   - an operating phase, in which said electrodes (11, 12) are supplied with a charge opposite that of the membranes (6, 7) of the closed cells (5) facing the electrodes (11, 12), in order to force the ionized particles present in the treatment liquid (F) contained inside said open cells (9) to pass inside said closed cells (5) through said anionic (6) and cationic (7) membranes, and
   - a regeneration phase in which said electrodes (11, 12) are supplied with a charge equal to that of the membranes (6, 7) of the closed cells (5) facing the electrodes (11, 12), in order to force the ionized particles present inside said closed cells (5) to pass inside said open cells (9) through said anionic (6) and cationic (7) membranes;

   said method being **characterized in that** during said operating phase a polymer substance (15), contained inside said closed cells (5) and having functional groups with non-zero electric charge, forms chemical bonds with the charged particles of said liquid flow, preventing the precipitation thereof.

10. Method for operating an apparatus for purifying a liquid, according to claim 9, wherein said control of the electrical power supply by said control unit (14) provides for:

    - measuring, through a current meter connected to said control unit (14), the quantity of charge absorbed over time by said electrical power supply means (13), which is proportional to the charged particles stored in said closed cells (5) during said operating phase;
    - determining, from said measurement of the quantity of charge stored in said closed cells (5), the residual capacity of water purification as a difference with respect to a maximum capacity of the closed cells (5) to accumulate charges therein, reset in said control unit (14);
    - comparing such residual capacity value with the consumption demand provided by a consumption curve stored in said control unit (14);
    - controlling, in response to said comparison, in particular according to a programmable logic, the regeneration phase of said apparatus (1).

11. Method for operating an apparatus for purifying a liquid, according to claim 10, wherein the consumption curve is determined on a daily basis and through measurement with a flow meter connected to the conduit that supplies liquid to the user, as the average of multiple consumption days, in particular as a moving average.

**12.** Method for operating an apparatus for purifying a liquid, according to claim 9, **characterized in that** it comprises a periodic phase of descaling by means of injection of a dose of solubilizing product which is maintained for a time interval in contact with the membranes (6, 7), the fluid passage being inhibited.

**13.** Method for operating an apparatus for purifying a liquid, according to claim 12, **characterized in that** said control unit (14) controls, during said descaling phase, the operating polarity of said electrodes in order to transport said solubilizing product inside said closed cells (5).

**14.** Method for operating an apparatus for purifying a liquid, according to claim 9, **characterized in that** said control unit (14), during said operating phase, receives conductivity values from a conductivity meter connected to the outlet opening (4) of said container and adjusts the electrical power supply (13) proportionally to such values, in particular in order to maintain the same conductivity constant at a predefined value.

**15.** Method for operating an apparatus for purifying a liquid, according to claim 9, **characterized in that** said control unit (14), during said regeneration phase, receives conductivity values from a conductivity meter connected to the outlet opening (4) of said container and adjusts the liquid flow rate or its duration in order to not exceed maximum concentrations of charged particles within the open cells (9).

**Patentansprüche**

**1.** Vorrichtung zum Reinigen einer Flüssigkeit, die Folgendes umfasst:

- einen Behälter (2) mit mindestens einer Eingangsöffnung (3) und mindestens einer Ausgangsöffnung (4), der geeignet ist, von einem ionisierte Partikel enthaltenden, aufzubereitenden Flüssigkeitsstrom (F) überquert zu werden;
- mindestens eine Vielzahl geschlossener Zellen (5), von denen jede von mindestens einer anionischen Membran (6) und von mindestens einer kationischen Membran (7) begrenzt wird, wobei diese Membranen (6, 7) auf ihrem Umfang miteinander durch dazwischen eingefügte erste Abstandshalterelemente (8) versiegelt sind;
- mindestens eine Vielzahl offener Zellen (9), die geeignet sind, von dem genannten aufzubereitenden Flüssigkeitsstrom (F) überquert zu werden, von denen jede von der anionischen Membran (6) und der kationischen Membran (7) von zwei aneinandergrenzenden geschlossenen Zellen (5) begrenzt wird, zwischen die die offene Zelle (9) eingefügt ist, die zweite Abstandshalterelemente (10) umfasst, die zum Trennen der genannten anionischen Membran (6) und kationischen Membran (7) außerhalb der genannten geschlossenen Zellen (5) angeordnet sind;
- mindestens zwei mit zwei Endzellen des genannten Behälters (2) verbundene Elektroden (11, 12), die an Stromversorgungselemente (13), die geeignet sind, ihnen eine kontinuierliche Versorgungsspannung ($V_A$) zu liefern, angeschlossen sind;
- ein an die genannten Stromversorgungselemente (13) angeschlossenes Steuergerät (14), das geeignet ist, abwechselnd die Umkehrung der Polarität der genannten Elektroden (11, 12) zwischen einer ersten Betriebspolarität, mit der es die Elektroden (11, 12) bei einer der der Membranen (6, 7) der den Elektroden (11, 12) gegenüberliegenden geschlossenen Zellen (5) entgegengesetzten Ladung versorgt, damit die ionisierten Partikel in der im Inneren der genannten offenen Zellen (9) enthaltenen Aufbereitungsflüssigkeit (F) über die genannten anionischen (6) und kationischen Membranen (7) in das Innere der genannten geschlossenen Zellen (5) übergehen, und einer zweiten Regenerationspolarität, mit der es die Elektroden (11, 12) bei einer der Ladung der Membranen (6, 7) der den Elektroden (11, 12) gegenüberliegenden geschlossenen Zellen (5) entsprechenden Ladung versorgt, damit die ionisierten Partikel im Inneren der genannten geschlossenen Zellen (5) über die genannten anionischen (6) und kationischen Membranen (7) in das Innere der genannten offenen Zellen (9) übergehen, zu steuern;

wobei die genannte Vorrichtung (1) **dadurch gekennzeichnet** ist, außerdem mindestens eine polymerische Substanz (15) mit funktionellen Gruppen mit nicht bei null liegender elektrischer Ladung zu umfassen, die im Inneren der genannten geschlossenen Zellen (5) enthalten und darauf ausgelegt ist, chemische Verbindungen mit den geladenen Partikeln der genannten Flüssigkeit einzugehen, die in die genannten geschlossenen Zellen (5) durch Überqueren der genannten anionischen (6) und der genannten kationischen (7) Membranen eintritt.

**2.** Vorrichtung zur Reinigung einer Flüssigkeit nach Anspruch 1, **dadurch gekennzeichnet, dass** die genannte polymerische Substanz (15) unter einem Polyelektrolyt, einem Harz mit Ionenaustausch oder einem Harz mit Kationenaustausch oder einer Kombination der beiden gewählt wird.

**3.** Vorrichtung zur Reinigung einer Flüssigkeit nach Anspruch 1, **dadurch gekennzeichnet, dass** sie mindestens eine erste Leitung (16) zur Entnahme gereinigter Flüssigkeit und mindestens eine zweite Leitung (17) zur Entnahme von Flüssigkeit mit einer Konzentration an ionisierten Partikeln umfasst und diese Leitungen (16, 17) an die genannte Ausgangsöffnung (4) über an das genannte Steuergerät (14) angeschlossene Absperrelemente (18) angeschlossen sind, um den selektiven Übergang des genannten Flüssigkeitsstroms (F) in die genannte erste Leitung (16) oder in die genannte zweite Leitung (17) zu steuern.

4. Vorrichtung zur Reinigung einer Flüssigkeit nach Anspruch 3, **dadurch gekennzeichnet, dass** das genannte Steuergerät (14) geeignet ist, die genannten Absperrelemente (18) zwischen einer Betriebsphase, in der sie die genannte Ausgangsöffnung (4) mit der genannten ersten Leitung (16) zur Entnahme der mit den mit der genannten ersten Betriebspolarität geladenen genannten Elektroden (11, 12) gereinigten Flüssigkeit verbinden, und einer Regenerationsphase, in der sie die genannte Ausgangsöffnung (4) mit der genannten zweiten Leitung (17) zur Entnahme der Flüssigkeit mit den mit der genannten zweiten Regenerationspolarität geladenen Elektroden steuern.

5. Vorrichtung zur Reinigung einer Flüssigkeit nach Anspruch 1, **dadurch gekennzeichnet, dass** sie in den genannten geschlossenen Zellen (5) enthaltene erste elastisch nachgiebige Elemente (8) umfasst, um elastisch auf Änderungen der Druckdifferenzen zu reagieren, denen die anionischen und kationischen (6, 7) Membranen ausgesetzt sind.

6. Vorrichtung zur Reinigung einer Flüssigkeit nach Anspruch 1, **dadurch gekennzeichnet, dass** sie in den Behälter (2) eingefügte und im Wesentlichen mit der Folge geschlossener oder geöffneter Zellen (5, 9) ausgerichtete zweite elastisch nachgiebige Elemente (21) umfasst, um elastisch auf Änderungen von Druckdifferenzen zu reagieren, denen die anionischen und kationischen Membranen (6, 7) ausgesetzt sind, um Volumenänderungen der geschlossenen Zellen (5) im Anschluss an ihre Absorption oder Desorption der Flüssigkeit und/oder der geladenen Partikel auszugleichen.

7. Vorrichtung zur Reinigung einer Flüssigkeit nach Anspruch 1, **dadurch gekennzeichnet, dass** die genannten geschlossenen Zellen (5) mit mindestens einer Öffnung (40) versehen sind, um den inneren Überdruck zu begrenzen und den Gasauslass zu gestatten.

8. Vorrichtung zur Reinigung einer Flüssigkeit nach Anspruch 1, **dadurch gekennzeichnet, dass** sie mindestens ein an die Ausgangsöffnung (4) des Behälters (2) angeschlossenes Leitfähigkeitsmessgerät umfasst, das an das Steuergerät (14) angeschlossen ist.

9. Verfahren zum Betrieb einer Vorrichtung zur Reinigung einer Flüssigkeit, umfassend:

   - einen Behälter (2) mit mindestens einer Eingangsöffnung (3) und mindestens einer Ausgangsöffnung (4), der geeignet ist, von einem ionisierte Partikel enthaltenden, aufzubereitenden Flüssigkeitsstrom (F) überquert zu werden;
   - mindestens eine Vielzahl geschlossener Zellen (5), von denen jede von mindestens einer anionischen Membran (6) und von mindestens einer kationischen Membran (7) begrenzt wird, wobei diese Membranen (6, 7) auf ihrem Umfang miteinander durch dazwischen eingefügte erste Abstandshalterelemente (8) versiegelt sind;
   - mindestens eine Vielzahl offener Zellen (9), die geeignet sind, von dem genannten aufzubereitenden Flüssigkeitsstrom (F) überquert zu werden, von denen jede von der anionischen Membran (6) und der kationischen Membran (7) von zwei aneinandergrenzenden geschlossenen Zellen (5) begrenzt wird, zwischen die die offene Zelle (9) eingefügt ist, die zweite Abstandshalterelemente (10) umfasst, die zum Trennen der genannten anionischen Membran (6) und kationischen Membran (7) außerhalb der genannten geschlossenen Zellen (5) angeordnet sind;
   - mindestens zwei mit zwei Endzellen des genannten Behälters (2) verbundene Elektroden (11, 12), die an Stromversorgungselemente (13), die geeignet sind, ihnen eine kontinuierliche Versorgungsspannung ($V_A$) zu liefern, angeschlossen sind;
   - ein zur Steuerung der Versorgung der genannten Elektroden (11, 12) an die genannten Stromversorgungselemente (13) angeschlossenes Steuergerät (14);

   bei dem das genannte Verfahren vorsieht, dass das genannte Steuergerät (14) abwechselnd die Umkehrung der Polarität der genannten Elektroden (11, 12) wie folgt steuert:

   - zwischen einer Betriebsphase, in der die genannten Elektroden (11, 12) bei einer der der Membranen (6, 7) der den geschlossenen Zellen (5) gegenüberliegenden Elektroden (11, 12) entgegengesetzten Ladung versorgt werden, um die ionisierten Partikel in der im Inneren der genannten geöffneten Zellen (9) enthaltenen Aufbereitungsflüssigkeit (F) dazu zu bringen, über die genannten anionischen (6) und kationischen Membranen (7) in das Innere der genannten geschlossenen Zellen (5) überzugehen und

- einer Regenerationsphase, in der die genannten Elektroden (11, 12) bei einer der der Membranen (6, 7) der den Elektroden (11, 12) gegenüberliegenden geschlossenen Zellen (5) entsprechenden Ladung versorgt werden, um die in den genannten geschlossenen Zellen (5) enthaltenen ionisierten Partikel dazu zu bringen, über die genannten anionischen (6) und kationischen Membranen (7) in die genannten offenen Zellen (9) überzugehen;

wobei das genannte Verfahren **dadurch gekennzeichnet ist, dass** während der genannten Betriebsphase eine im Inneren der genannten geschlossenen Zellen (5) enthaltene polymerische Substanz (15) mit Funktionsgruppen mit nicht null entsprechender elektrischer Ladung chemische Verbindungen mit den geladenen Partikeln des genannten Flüssigkeitsstrom eingeht und so dessen Fällung verhindert.

10. Verfahren zum Betrieb einer Vorrichtung zur Reinigung einer Flüssigkeit nach Anspruch 9, bei dem die genannte Steuerung der Stromversorgung von Seiten des genannten Steuergeräts (14) Folgendes vorsieht:

- Messung der im Laufe der Zeit von den genannten Stromversorgungselementen (13) aufgenommenen Ladung, die proportional zu den in den genannten geschlossenen Zellen (5) während der genannten Betriebsphase eingelagerten geladenen Partikel ist, über ein an das genannte Steuergerät (14) angeschlossenes Strommessgerät;
- Bestimmung der Restkapazität der Wasserreinigung als Differenz im Verhältnis zu einer maximalen Kapazität der geschlossenen Zellen (5) der Ansammlung von Ladungen in ihrem Inneren, die in dem genannten Steuergerät (14) neu eingegeben wurde, anhand der genannten Messung der in den genannten geschlossenen Zellen (5) eingelagerten Ladungsmenge;
- Vergleich dieses Werts der Restkapazität mit der von einer in dem genannten Steuergerät (14) gespeicherten Verbrauchskurve vorgesehenen Verbrauchsanforderung;
- Steuerung als Reaktion auf den genannten Vergleich, insbesondere nach einer programmierbaren Logik, der Regenerationsphase der genannten Vorrichtung (1).

11. Verfahren zum Betrieb einer Vorrichtung zur Reinigung einer Flüssigkeit nach Anspruch 10, bei dem die Verbrauchskurve täglich erstellt und anhand der Messung mit einem an die Leitung der Flüssigkeitsversorgung an den Verbraucher angeschlossenen Durchflussmessers als Mittelwert mehrerer Verbrauchstage insbesondere als mobiler Mittelwert bestimmt wird.

12. Verfahren zum Betrieb einer Vorrichtung zur Reinigung einer Flüssigkeit nach Anspruch 9, **dadurch gekennzeichnet, dass** es eine Phase der regelmäßigen Entkalkung durch Einspritzen eines löslich machenden Produkts umfasst, das über einen bestimmten Zeitraum im Kontakt mit den Membranen (6, 7) verbleibt, da der Flüssigkeitsdurchgang unterbunden ist.

13. Verfahren zum Betrieb einer Vorrichtung zur Reinigung einer Flüssigkeit nach Anspruch 12, **dadurch gekennzeichnet, dass** das genannte Steuergerät (14) während der genannten Entkalkungsphase die Betriebspolarität der genannten Elektroden steuert, um das genannte löslich machende Produkt in das Innere der genannten geschlossenen Zellen (5) zu transportieren.

14. Verfahren zum Betrieb einer Vorrichtung zur Reinigung einer Flüssigkeit nach Anspruch 9, **dadurch gekennzeichnet, dass** das genannte Steuergerät (14) während der genannten Betriebsphase Leitfähigkeitswerte von einem an die Ausgangsöffnung (4) des genannten Behälters angeschlossenen Leitfähigkeitsmessgerät erhält und die Stromversorgung (13) proportional auf diese Werte reguliert, insbesondere, um diese Leitfähigkeit auf einem festgelegten Wert konstant zu halten.

15. Verfahren zum Betrieb einer Vorrichtung zur Reinigung einer Flüssigkeit nach Anspruch 9, **dadurch gekennzeichnet, dass** das genannte Steuergerät (14) während der genannten Regenerationsphase Leitfähigkeitswerte von einem an die Ausgangsöffnung (4) des genannten Behälters angeschlossenen Leitfähigkeitsmessgerät erhält und den Durchsatz oder die Dauer des Flüssigkeitsstroms reguliert, um das Überschreiten der Höchstkonzentration der geladenen Partikel in den offenen Zellen (9) zu vermeiden.

**Revendications**

1. Appareil de purification d'un liquide, qui comprend :

- un récipient (2) doté d'au moins une ouverture d'entrée (3) et d'au moins une ouverture de sortie (4) et susceptible d'être traversé par un flux de liquide (F) à traiter contenant des particules ionisées ;
- au moins une pluralité de cellules fermées (5), chacune délimitée par au moins une membrane anionique (6) et par au moins une membrane cationique (7), lesdites membranes (6, 7) étant périmétralement scellées entre elles avec des premiers moyens d'écartement (8) interposés ;
- au moins une pluralité de cellules ouvertes (9) susceptibles d'être traversées par ledit flux de liquide (F) à traiter, chacune délimitée par la membrane anionique (6) et par la membrane cationique (7) de deux cellules fermées (5) adjacentes entre lesquelles la même cellule ouverte (9) est interposée et comprenant des deuxièmes moyens d'écartement (10) placés pour servir de séparation auxdites membranes anionique (6) et cationique (7) à l'extérieur desdites cellules fermées (5) ;
- au moins deux électrodes (11, 12) associées à deux cellules d'extrémité dudit récipient (2) et reliées à des moyens d'alimentation électrique (13) aptes à leur fournir une tension d'alimentation ($V_A$) continue ;
- une unité de contrôle (14) reliée auxdits moyens d'alimentation électrique (13), apte à commander en alternance l'inversion de polarité desdites électrodes (11, 12) entre une première polarité de service, avec laquelle elle alimente les électrodes (11, 12) à une charge opposée à celle des membranes (6, 7) des cellules fermées (5) placées en vis à vis des électrodes (11, 12), pour forcer les particules ionisées présentes dans le liquide de traitement (F) contenu à l'intérieur desdites cellules ouvertes (9) à passer à l'intérieur desdits cellules fermées (5) à travers lesdites membranes anioniques (6) et cationiques (7), et une deuxième polarité de régénération avec laquelle elle alimente les électrodes (11, 12) à une charge égale à celle des membranes (6, 7) des cellules fermées (5) placées en vis-à-vis des électrodes (11, 12), pour forcer les particules ionisées présentes à l'intérieur desdites cellules fermées (5) à passer à l'intérieur desdites cellules ouvertes (9) à travers lesdites membranes anioniques (6) et cationiques (7) ;

ledit appareil (1) étant **caractérisé en ce qu'**il comprend en outre au moins une substance polymérique (15) ayant des groupes fonctionnels avec charge électrique non nulle, laquelle est contenue à l'intérieur desdites cellules fermées (5) et est prédisposée pour créer des liens chimiques avec les particules chargées dudit liquide qui entre dans lesdites cellules fermées (5) traversant lesdites membranes anioniques (6) et lesdites membranes cationiques (7).

2. Appareil de purification d'un liquide selon la revendication 1, **caractérisé en ce que** ladite substance polymérique (15) est choisie entre un polyélectrolyte, une résine échangeuse d'ions ou une résine échangeuse de cations ou une leur combinaison.

3. Appareil de purification d'un liquide selon la revendication 1, **caractérisé en ce qu'**il comprend au moins un premier conduit d'extraction (6) de liquide purifié et au moins un deuxième conduit d'évacuation (17) de liquide avec concentration de particules ionisées, lesdits conduits (16, 17) étant reliés à ladite ouverture de sortie (4) à travers des moyens d'interception (18) reliés à ladite unité de contrôle (14) pour commander le passage sélectif dudit flux de liquide (F) dans ledit premier conduit (16) ou dans ledit deuxième conduit (17).

4. Appareil de purification d'un liquide selon la revendication 3, **caractérisé en ce que** ladite unité de contrôle (14) est susceptible de commander lesdits moyens d'interception (18) entre une phase de service, dans laquelle ils relient ladite ouverture de sortie (4) audit premier conduit d'extraction (16) de liquide purifié par lesdites électrodes (11, 12) chargées à ladite première polarité de service et une phase de régénération, dans laquelle ils relient ladite première ouverture de sortie (4) audit deuxième conduit d'évacuation (17) de liquide avec lesdites électrodes chargées à ladite deuxième polarité de régénération.

5. Appareil de purification d'un liquide selon la revendication 1, **caractérisé en ce qu'**il comprend des premiers moyens élastiquement souples (8) contenus à l'intérieur desdites cellules fermées (5) pour répondre élastiquement aux variations de différences de pression auxquelles sont soumises les membranes anioniques et cationiques (6, 7).

6. Appareil de purification d'un liquide selon la revendication 1, **caractérisé en ce qu'**il comprend des deuxièmes moyens élastiquement souples (21) insérés dans le récipient (2) et essentiellement alignés à la suite de cellules fermées ou ouvertes (5, 9), pour répondre élastiquement aux variations de différences de pression auxquelles sont soumises les membranes anioniques et cationiques (6, 7) pour compenser des variations de volume des cellules fermées (5) à la suite de leur absorption ou de leur désorption de liquide et/ou de particules chargées.

7. Appareil de purification d'un liquide selon la revendication 1, **caractérisé en ce que** lesdites cellules fermées (5) sont pourvues d'au moins un trou (40) pour limiter la surpression interne et permettre l'évacuation de gaz.

8. Appareil de purification d'un liquide selon la revendication 1, **caractérisé en ce qu'**il comprend au moins un conductimètre connecté à l'ouverture de sortie (4) du récipient (2), en liaison avec l'unité de contrôle (14).

9.  Procédé de fonctionnement d'un appareil de purification d'un liquide comprenant :

    - un récipient (2) doté d'au moins une ouverture d'entrée (3) et d'au moins une ouverture de sortie (4) et susceptible d'être traversé par un flux de liquide (F) à traiter contenant des particules ionisées ;
    - au moins une pluralité de cellules fermées (5), chacune délimitée par au moins une membrane anionique (6) et par au moins une membrane cationique (7), lesdites membranes (6, 7) étant périmétralement scellées entre elles avec des premiers moyens d'écartement (8) interposés ;
    - au moins une pluralité de cellules ouvertes (9) susceptibles d'être traversées par ledit flux de liquide (F) à traiter, chacune délimitée par la membrane anionique (6) et par la membrane cationique (7) de deux cellules fermées (5) adjacentes entre lesquelles la même cellule ouverte (9) est interposée et comprenant des deuxièmes moyens d'écartement (10) placés pour servir de séparation auxdites membranes anionique (6) et cationique (7) à l'extérieur desdites cellules fermées (5) ;
    - au moins deux électrodes (11, 12) associées à deux cellules d'extrémité dudit récipient (2) et reliées à des moyens d'alimentation électrique (13) aptes à leur fournir une tension d'alimentation ($V_A$) continue ;
    - une unité de contrôle (14) reliée auxdits moyens d'alimentation électrique (13) pour contrôler l'alimentation auxdites électrodes (11, 12) ;

    dans lequel ledit procédé prévoit que ladite unité de contrôle (14) commande en alternance l'inversion de polarité desdites électrodes (11, 12) entre :

    - une phase de service, dans laquelle lesdites électrodes (11, 12) sont alimentées à une charge opposée à celle des membranes (6, 7) des cellules fermées (5) placées en vis-à-vis des électrodes (11, 12), pour forcer les particules ionisées présentes dans le liquide de traitement (F) contenu à l'intérieur desdites cellules ouvertes (9) à passer à l'intérieur desdites cellules fermées (5) à travers lesdites membranes anioniques (6) et cationiques (7), et
    - une phase de régénération dans laquelle lesdites électrodes (11, 12) sont alimentées à une charge égale à celle des membranes (6, 7) des cellules fermées (5) placées en vis-à-vis des électrodes (11, 12), pour forcer les particules ionisées présentes à l'intérieur desdites cellules fermées (5) à passer à l'intérieur desdites cellules ouvertes (9) à travers lesdites membranes anioniques (6) et cationiques (7) ;

    ledit procédé étant **caractérisé en ce que** pendant ladite phase de service une substance polymérique (15) contenue à l'intérieur desdites cellules fermées (5) et ayant des groupes fonctionnels avec charge électrique non nulle, forme des liens chimiques avec les particules chargées dudit flux de liquide en en empêchant la précipitation.

10. Procédé de fonctionnement d'un appareil de purification d'un liquide, selon la revendication 9, dans lequel ledit contrôle de l'alimentation électrique par ladite unité de contrôle (14) prévoit de :

    - mesurer à l'aide d'un appareil pour mesurer le courant connecté à ladite unité de contrôle (14), la quantité de charge absorbée dans le temps par lesdits moyens d'alimentation électrique (13), laquelle est proportionnelle aux particules chargées stockées dans lesdites cellules fermées (5) pendant ladite phase de service ;
    - déterminer par ladite mesure de quantité de charge stockée dans lesdites cellules fermées (5), la capacité résiduelle de purification d'eau, comme différence par rapport à une capacité maximale de cellules fermées (5) d'accumuler des charges à leur intérieur, reconfigurée dans ladite unité de contrôle (14) ;
    - comparer cette valeur de capacité résiduelle avec la demande de consommation prévue par une courbe de consommation mémorisée dans ladite unité de contrôle (14) ;
    - commander en réponse à ladite comparaison, en particulier selon une logique programmable, la phase de régénération dudit appareil (1).

11. Procédé de fonctionnement d'un appareil de purification d'un liquide, selon la revendication 10, dans lequel la courbe de consommation est journalière et est mesurée à l'aide d'un fluxmètre connecté au conduit d'alimentation de liquide aux utilisateurs, comme moyenne de plusieurs jours de consommation, en particulier comme moyenne mobile.

12. Procédé de fonctionnement d'un appareil de purification d'un liquide, selon la revendication 9, **caractérisé en ce qu'**il comprend une phase périodique de détartrage par l'injection d'une dose de produit solubilisant qui est maintenu pour un intervalle de temps en contact avec les membranes (6, 7), le passage de fluide étant inhibé.

13. Procédé de fonctionnement d'un appareil de purification d'un liquide, selon la revendication 12, **caractérisé en ce que** ladite unité de contrôle (14) commande pendant ladite phase de détartrage la polarité de service desdites électrodes pour transporter ledit produit solubilisant à l'intérieur desdites cellules fermées (5).

14. Procédé de fonctionnement d'un appareil de purification d'un liquide, selon la revendication 9, **caractérisé en ce que** ladite unité de contrôle (14) pendant ladite phase de service reçoit des valeurs de conductivité d'un conductimètre connecté à l'ouverture de sortie (4) dudit récipient et régule l'alimentation électrique (13) proportionnellement à ces valeurs, en particulier pour maintenir constante la même conductivité à une valeur préétablie.

15. Procédé de fonctionnement d'un appareil de purification d'un liquide, selon la revendication 9, **caractérisé en ce que** ladite unité de contrôle (14) pendant ladite phase de régénération reçoit des valeurs de conductivité d'un conductimètre connecté à l'ouverture de sortie (4) dudit récipient et règle le débit de liquide ou sa durée pour éviter le dépassement de concentrations maximales de particules chargées dans les cellules ouvertes (9).

Fig. 1

Fig. 2

EP 3 279 153 B1

Fig. 3

Fig. 4

Fig. 5

Fig. 7

Fig. 6

Fig. 8

Fig. 9

Fig.10

Fig.11

EP 3 279 153 B1

Fig. 12

Fig. 13

29

Fig.14

Fig.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3219567 A
- WO 2015068797 A

- EP 2778140 A1

**Non-patent literature cited in the description**

- Cyclic electrodialysis: Experimental results in a closed system. **D. W. THOMPSON ; D. BASS.** The Canadian Journal of Chemical Engineering. June 1974, vol. 52, 289-432